# EUROPEAN PATENT APPLICATION

(11) **EP 2 905 850 A1**
(43) Date of publication of application: **12.08.2015**
(21) Application number: 14785504.3
(22) Date of filing: 27.03.2014
(51) Int. Cl.: H01R 43/055

(54) **TERMINAL CRIMPING DEVICE**

(30) Priority: 17.04.2013 JP 2013086297
(71) Applicant: Sumitomo Wiring Systems, Ltd., Yokkaichi-shi, Mie 510-8503 (JP)
(72) Inventor: TSUCHIDA Takahiro, Yokkaichi-shi Mie 510-8503 (JP); UEDA Naoyuki, Yokkaichi-shi Mie 510-8503 (JP); HAYASHI Kouji, Yokkaichi-shi Mie 510-8503 (JP); MIZUTANI Tatsuya, Yokkaichi-shi Mie 510-8503 (JP)
(74) Representative: Müller-Boré & Partner Patentanwälte PartG mbB
(86) International application number: PCT/JP2014/058714
(87) International publication number: WO 2014/171283

(57) **Abstract**

An object of the present invention is to provide a technology for applying a proper crimping process to a terminal. To achieve this object, a terminal crimping device includes a one-sided braking unit for braking a movement of a series terminal. The one-sided braking unit includes a main body portion arranged to face the series terminal and a supporting portion for pivotably supporting the main body portion. A pivot axis of the main body portion is located upstream of a reference plane in a feed direction if a surface of the main body portion facing the series terminal is referred to as a facing surface and a virtual plane passing through a contact position of the facing surface with the series terminal and extending along a direction normal to a stage is referred to as the reference plane.

## Description

### Technical Field

The present invention relates to a terminal crimping device for successively crimping terminals to end parts of wires.

### Background Art

A terminal crimping device (terminal crimping applicator) is known as a device for successively crimping terminals to end parts of wires. Generally, a terminal crimping device includes a feeding unit for successively dispensing and feeding a series terminal (strip-like member in which a plurality of terminals are connected) along a determined feeding path and a crimping unit for swaging and crimping a terminal to a wire by a die moved along a direction perpendicular to the feeding path, and crimping processes are successively performed by the cooperation of each unit (see, for example, patent literature 1).

In the terminal crimping device, the series terminal is fed, for example, by hooking a claw-like member (feed claw) to feed holes formed at constant intervals on the series terminal and moving the feed claw in a feed direction in conjunction with a crimping operation in the crimping unit.

However, in the case of this mode, a situation where the series terminal is slightly displaced in the feed direction (excessive feeding) due to inertial movement when the feed claw is stopped or the series terminal is displaced in a direction opposite to the feed direction following a movement of the feed claw (return displacement) when the feed hole is returned is likely to occur. Accordingly, a braking member for preventing movements of the series terminal in the feed direction and the return direction by pressing the series terminal with a constant pressure is provided in many cases to stably feed the series terminal by the feed claw by suppressing excessive feeding and return displacement.

### Citation List

### Patent Literature

Patent literature 1: Publication of Japanese Patent No. 2870362

### Summary of the Invention

### Technical Problem

In the feeding mode using the aforementioned feed claw and braking member, it is difficult to control a feeding distance of the series terminal with high accuracy although significantly excessive feeding and significant return displacement can be suppressed. Thus, the terminal to be crimped is left at a position slightly displaced from a center of the die in many cases.

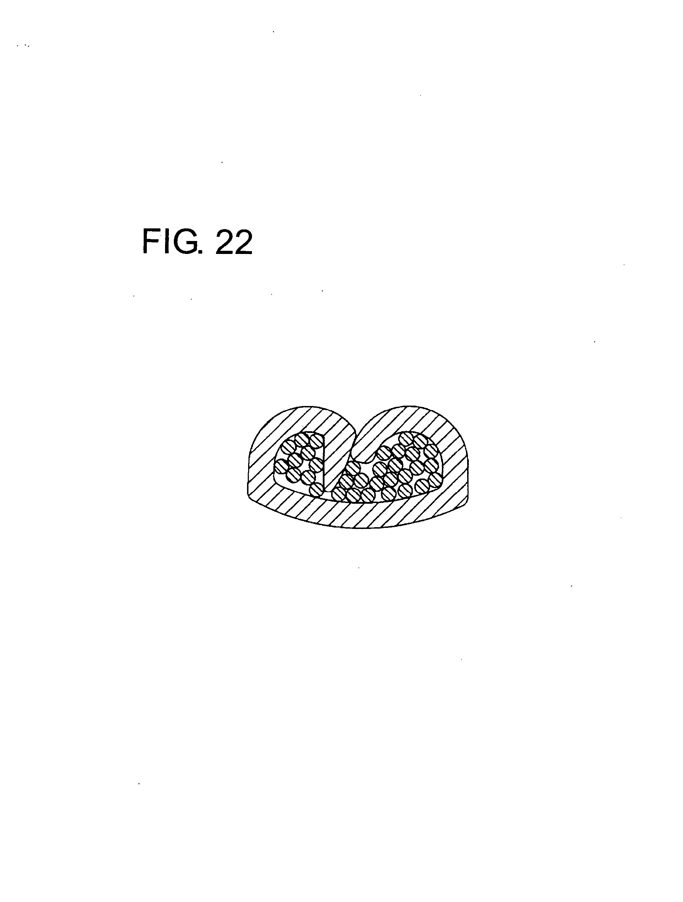

Here, if the terminal is swaged at a position even slightly displaced from the center of the die, a proper crimping process is not applied to the terminal. FIG. 22 diagrammatically shows an example of a cross-sectional shape of a terminal swaged at a position displaced from a center of a die. As illustrated here, a barrel portion of the terminal is shaped to be bilaterally asymmetrical and the terminal is not deformed into an ideal shape if the terminal is swaged at the position even slightly displaced from the center of the die. As a result, a possibility of inconvenience such as a crimping failure or a conduction failure increases.

This invention was developed in view of the above problem and aims to provide a technology for applying a proper crimping process to a terminal.

### Solution to Problem

A first aspect is directed to a terminal crimping device including a crimping unit for crimping one of a plurality of terminals connected in a series terminal to a wire by swaging the terminal by a die, a feeding unit for feeding the series terminal by one terminal toward the crimping unit by moving a feed claw hooked to a feed hole of the series terminal placed on a stage in conjunction with a crimping operation in the crimping unit, and a braking unit for braking a movement of the series terminal, wherein the braking unit includes a main body portion arranged to face the series terminal and a supporting portion for pivotably supporting the main body portion, and a pivot axis of the main body portion is located upstream of a reference plane in a feed direction if a surface of the main body portion facing the series terminal is referred to as a facing surface, a position in contact with the series terminal in the facing surface is referred to as a contact position and a virtual plane passing through the contact position and extending along a direction normal to the stage is referred to as the reference plane.

According to a second aspect, in the terminal crimping device according to the first aspect, the facing surface is a surface having no part bent at an acute angle, but having a part bent at an obtuse angle when viewed in a direction perpendicular to the feed direction of the series terminal and the direction normal to the stage.

According to a third aspect, in the terminal crimping device according to the first or second aspect, an angle between a straight line connecting the pivot axis and the contact position and a perpendicular to the stage from the pivot axis is larger than 0° and not larger than 45°.

According to a fourth aspect, in the terminal crimping device according to any one of the first to third aspects, the angle between the straight line connecting the pivot axis and the contact position and the perpendicular to the stage from the pivot axis is larger than 2° and not larger than 10°.

According to a fifth aspect, in the terminal crimping device according to any one of the first to fourth aspects, the facing surface has an arcuate curved surface area when viewed in the direction perpendicular to the feed direction of the series terminal and the direction normal to the stage.

According to a sixth aspect, in the terminal crimping device according to the fifth aspect, a flat surface area connected to the curved surface area is formed downstream of the curved surface area in the feed direction on the facing surface.

According to a seventh aspect, in the terminal crimping device according to any one of the first to sixth aspects, the braking unit further includes a biasing member for biasing the main body portion in such a pivot direction as to move the facing surface in a direction opposite to the feed direction.

According to an eighth aspect, in the terminal crimping device according to the seventh aspect, the magnitude of a force of the biasing member for biasing the main body portion changes according to the position of the feed claw.

According to a ninth aspect, in the terminal crimping device according to the eighth aspect, the biasing member includes a first resilient member having one end coupled to a position of the main body portion upstream of the pivot axis and the other end integrally coupled to the feed claw, the main body portion is arranged upstream of the feed claw in the feed direction, and the first resilient member has a natural length in a state where the feed claw is at a specific position if a position of the feed claw when the constraint of the terminal by the die is started in the crimping unit is referred to as the specific position.

According to a tenth aspect, in the terminal crimping device according to the eighth or ninth aspect, the biasing member includes a second resilient member having one end coupled to a position of the main body portion upstream of the pivot axis and the other end coupled to a position of the supporting portion downstream of the pivot axis in the feed direction in an extended state.

According to an eleventh aspect, in the terminal crimping device according to any one of the eighth to tenth aspects, the biasing member includes a third resilient member having one end coupled to a position of the main body portion downstream of the pivot axis and the other end coupled to a position of the supporting portion downstream of the pivot axis in the feed direction in a shortened state.

According to a twelfth aspect, in the terminal crimping device according to any one of the first to eleventh aspects, the braking unit further includes a release lever attached to a position of the main body portion opposite to the facing surface across the pivot axis.

According to a thirteenth aspect, in the terminal crimping device according to any one of the first to twelfth aspects, the tip of the feed claw closes the feed hole over the entire width along the feed direction with the feed claw hooked to the feed hole.

According to a fourteenth aspect, in the terminal crimping device according to any one of the first to thirteenth aspects, the feed claw is in a non-contact state with the series terminal until the terminal is swaged after being constrained by the die in the crimping unit.

### Effects of the Invention

According to the first aspect, the main body portion pivots to press the facing surface against the series terminal, whereby a movement of the series terminal in the return direction is braked, when the series terminal is going to move in a return direction opposite to the feed direction. On the other hand, the main body portion pivots to move the facing surface away from the series terminal, whereby a movement of the series terminal in the feed direction is not blocked, when the series terminal is going to move in the feed direction. That is, the movement in the return direction can be braked without the movement in the feed direction being braked. According to this configuration, even if the terminal to be crimped is fed to a position displaced upstream of an ideal crimping position for the die in the feed direction, this terminal is naturally moved to the ideal crimping position by being guided by a molding surface of the die. Thus, even if the terminal to be crimped is fed to a position upstream of the ideal crimping position in the feed direction, the terminal can be swaged at the ideal crimping position. Specifically, a proper crimping process is applied to the terminal.

According to the second aspect, the facing surface is a surface having no part bent at an acute angle, but having a part bent at an obtuse angle when viewed in the direction perpendicular to the feed direction of the series terminal and the direction normal to the stage. Thus, even if the facing surface is pressed against the series terminal, a situation where the series terminal is scraped by this facing surface is unlikely to occur and the generation of metal powder is suppressed.

According to the third aspect, the angle between the straight line connecting the pivot axis and the contact position and the perpendicular to the stage from the pivot axis is larger than 0° and not larger than 45°. According to this configuration, the movement of the series terminal in the return direction can be sufficiently braked.

According to the fourth aspect, the angle between the straight line connecting the pivot axis and the contact position and the perpendicular to the stage from the pivot axis is larger than 2° and not larger than 10°. According to this configuration, the movement of the series terminal in the return direction can be particularly sufficiently braked.

According to the fifth aspect, the facing surface includes the arcuate curved surface area. According to this configuration, the main body portion can pivot according to a thickness of the series terminal and come into contact with the series terminal at a different position of this curved surface area. This enables various series terminals having different thicknesses to be braked.

According to the sixth aspect, the flat surface area connected to the curved surface area is formed downstream of the curved surface area in the feed direction on the facing surface. According to this configuration, the series terminal is pressed by the entire flat surface area when the facing surface and the series terminal come into contact in the flat surface area, whereby the movement of the series terminal in the return direction is sufficiently braked.

According to the seventh to eleventh embodiments, the biasing member is provided to bias the main body portion in such a pivot direction as to move the facing surface in the direction opposite to the feed direction. According to this configuration, the separation (floating) of the facing surface from the series terminal can be sufficiently suppressed and a braking force of the braking unit can be increased.

According to the twelfth aspect, the facing surface and the series terminal can be separated by operating the release lever to pivot the main body portion in such a pivot direction as to move the facing surface in the feed direction. Thus, a braked state of the series terminal can be easily released if necessary.

According to the thirteenth aspect, the tip of the feed claw closes the feed hole over the entire width along the feed direction with the feed claw hooked to the feed hole. According to this configuration, a situation where the series terminal is slightly displaced in the feed direction due to inertial movement is unlikely to occur when the feed claw moved in a state hooked to the feed hole is stopped. Specifically, excessive feed of the terminal is unlikely to occur.

According to the fourteenth aspect, the feed claw is in a non-contact state with the series terminal until the terminal is swaged after being constrained by the die in the crimping unit. According to this configuration, a movement of the terminal to be crimped is not blocked by the feed claw until the terminal is swaged after being constrained by the die. Thus, the terminal fed to the position upstream of the ideal crimping position for the die in the feed direction can particularly smoothly move to the ideal crimping position.

The object, features, aspects and advantages of this invention are made more apparent by the following detailed description and accompanying drawings.

### Brief Description of the Drawings

FIG. 1 is a plan view of a series terminal,
FIG. 2 is a schematic front view of a terminal crimping device according to a first embodiment,
FIG. 3 is a schematic perspective view of a path defining unit,
FIG. 4 is a view diagrammatically showing a state where a feed claw is feeding the series terminal,
FIG. 5 is a view showing a proper range of a terminal feed position,
FIG. 6 is a side view diagrammatically showing the overall configuration of a one-sided braking unit according to the first embodiment,
FIG. 7 is a side view diagrammatically showing the configuration of a main body portion,
FIG. 8 is a view showing a state where the main body portion comes into contact with each of series terminals having different thicknesses,
FIG. 9 is a view showing a state where the one-sided braking unit according to the first embodiment brakes the series terminal when the series terminal is going to move in a return direction,
FIG. 10 is a view showing a state where the one-sided braking unit according to the first embodiment does not brake the series terminal when the series terminal is going to move in a feed direction,
FIG. 11 is a view diagrammatically showing a state where the feed claw is moved in the feed direction,
FIG. 12 is a view diagrammatically showing a state where the feed claw is moved in the return direction,
FIG. 13 is a view diagrammatically showing a state where the terminal is constrained by a crimper,
FIG. 14 is a view showing a state where a crimping process is applied to the terminal,
FIG. 15 is a view diagrammatically showing a cross-sectional shape of the terminal to which the crimping process was applied to the terminal crimping device,
FIG. 16 is a schematic front view of a terminal crimping device according to a second embodiment,
FIG. 17 is a side view diagrammatically showing the overall configuration of a one-sided braking unit according to the second embodiment,
FIG. 18 is a side view diagrammatically showing the configuration of a main body portion of the one-sided braking unit according to the second embodiment,
FIG. 19 is a view showing a state where the main body portion of the one-sided braking unit according to the second embodiment is in contact with each of series terminals having different thicknesses,
FIG. 20 is a view showing a state where the one-sided braking unit according to the second embodiment brakes the series terminal when the series terminal is going to move in a return direction,
FIG. 21 is a view showing a state where the one-sided braking unit according to the second embodiment does not brake the series terminal when the series terminal is going to move in a feed direction, and
FIG. 22 is a view showing an example of a cross-sectional shape of a terminal swaged at a position displaced from a center of a die.

### Embodiments of the Invention

Hereinafter, embodiments of the present invention are described with reference to the accompanying drawings. The following embodiments are specific examples of the present invention and not of the nature to limit the technical scope of the present invention.

### <I. First Embodiment>

### <1. Series Terminal 9>

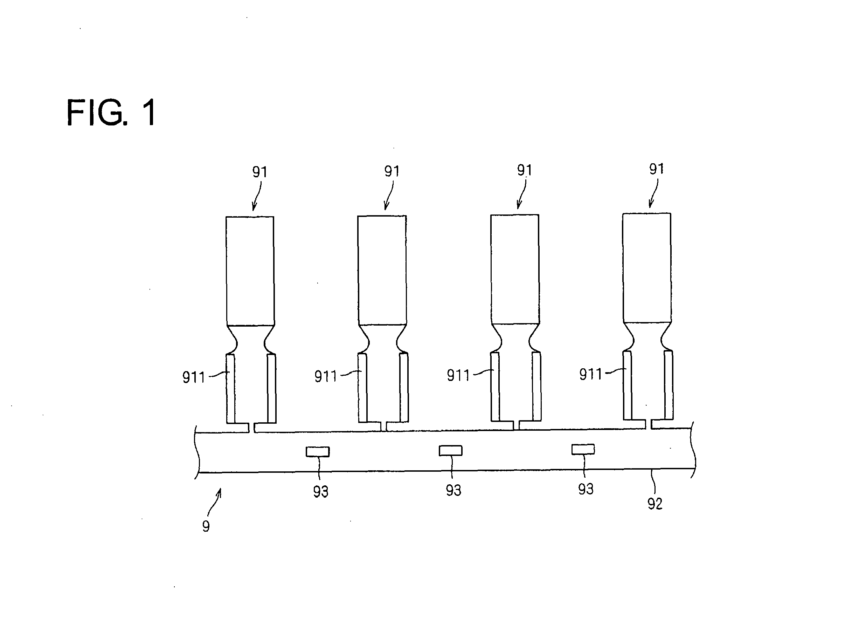

First, a series terminal 9 to be crimped by a terminal crimping device 1 is described with reference to FIG. 1. FIG. 1 is a plan view showing the series terminal 9.

The series terminal 9 is a strip-like member in which a plurality of terminals 91 are connected. Specifically, the plurality of terminals 91 are connected in parallel at equal intervals on one side of a strip-like chain band 92. The chain band 92 is formed with feed holes 92 at equal intervals in conformity with each terminal 91. A base portion (barrel portion) 911 of each terminal 91 is formed to have a substantially U-shaped cross-section so as to be crimpable to an end part of a wire.

### <2. Terminal Crimping Device 1 >

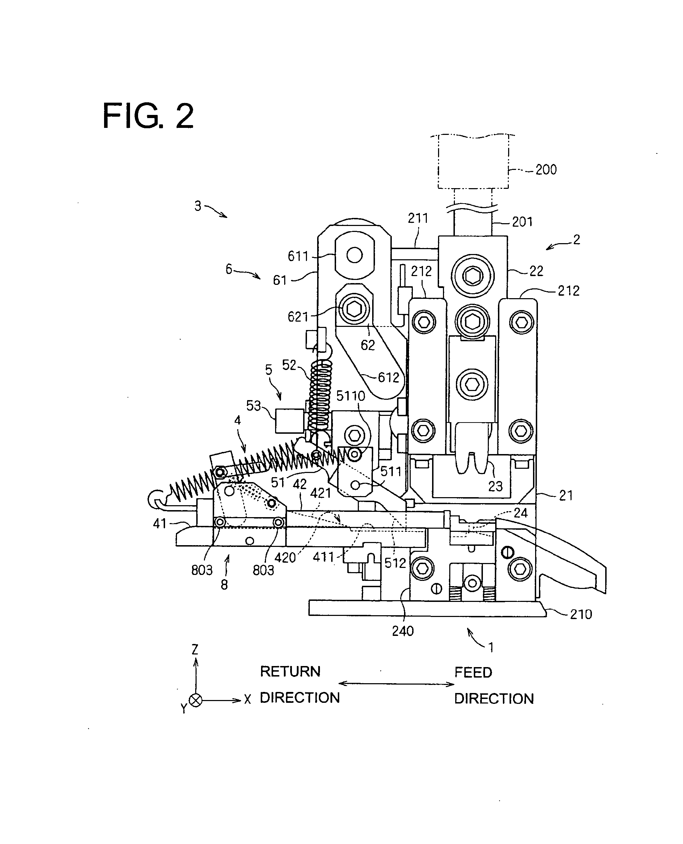

The configuration of the terminal crimping device 1 is described with reference to FIG. 2. FIG. 2 is a schematic front view of the terminal crimping device 1.. Note that such an XYZ coordinate system that a feed direction of the series terminal 9 is aligned with a +X direction and a vertical direction is aligned with a +Z direction is attached as appropriate in FIG. 2 and some of subsequent figures to be referred to later for the convenience of description.

The terminal crimping device 1 includes a crimping unit 2 for crimping and fixing the terminal 91 (specifically, barrel portion 911 of the terminal 91) connected in the series terminal 9 to the end of the wire, and a supplying unit 3 for dispensing and supplying the long series terminal 9 wound into a reel to the crimping unit 2, and these units 2, 3 operate in conjunction to successively perform a crimping process. More specifically, the supplying unit 3 mainly includes a path defining unit 4 for defining a feed path of the series terminal 9, a feeding unit 5 for feeding the series terminal 9 along the feed path, an interlocking mechanism 6 for linking a movement of the crimping unit 2 and that of the feeding unit 5 and a one-sided braking unit 8 as a mechanism for stabilizing the feed of the series terminal 9. The configuration of each component is specifically described below.

### <2-1. Crimping Unit 2>

The crimping unit 2 crimps the terminal 91 to the wire by swaging one 91 of the plurality of terminals 91 connected to the series terminal 9 by a die. The crimping unit 2 mainly includes a movable supporting frame 21, a shank portion 22, an upper die (crimper) 23 for crimping and a lower die (anvil) 24 for crimping. Besides, the crimping unit 2 includes a cutter for cutting the terminal 91 from the series terminal 9 and the like.

The movable supporting frame 21 includes a plate portion 211 standing in a substantially vertical posture on a plate-like base 210 and a pair of guide frame pieces 212, 212 fixed to one principal surface (front surface) of the plate portion 211. The pair of guide frame pieces 212, 212 are fixed to the base 210 in a substantially vertical posture and arranged in parallel at a predetermined distance from each other. Further, lower end parts of the pair of guide frame pieces 212, 212 are separated from the upper surface of the base 210, and a crimping operation using the crimper 23 and the anvil 24 is performed in this space.

The shank portion 22 is substantially in the form of a rectangular parallelepiped arrangeable between the pair of guide frame pieces 212, 212, and a width thereof is smaller (here, slightly smaller) than a spacing between the pair of guide frame pieces 212, 212. The shank portion 22 is guided vertically movably in a constant posture between an upper position and a lower position between the pair of guide frame pieces 212, 212. Further, an elevation driving mechanism unit 200 configured by an actuator such as an air cylinder is arranged above the shank portion 22 and the shank portion 22 moves upward and downward by receiving a drive force of the elevation driving mechanism unit 200 via a rod portion 201.

The crimper 23 is attached to a lower part of the shank portion 22. Further, the anvil 24 is attached at a position on the upper surface of the base 210 and below the shank portion 22 (i.e. lower position facing the crimper 23) via a lower die fixing portion 240.

In the thus configured crimping unit 2, the crimper 23 attached to the shank portion 22 is moved upward and downward as the shank portion 22 is moved upward and downward. Specifically, as the shank portion 22 is driven upward and downward, the crimper 23 moves toward and away from the anvil 24. When the crimper 23 is lowered in a state where the terminal 91 is arranged on the anvil 24, the crimper 23 moves toward the anvil 24 and the barrel portion 911 of the terminal 91 arranged on the anvil 24 is swaged between the crimper 23 and the anvil 24 to be crimped to an end part of a wire. Note that, associated with this, the cutter may cut this terminal 91 from the series terminal 9.

### <2.2 Path Defining Unit 4>

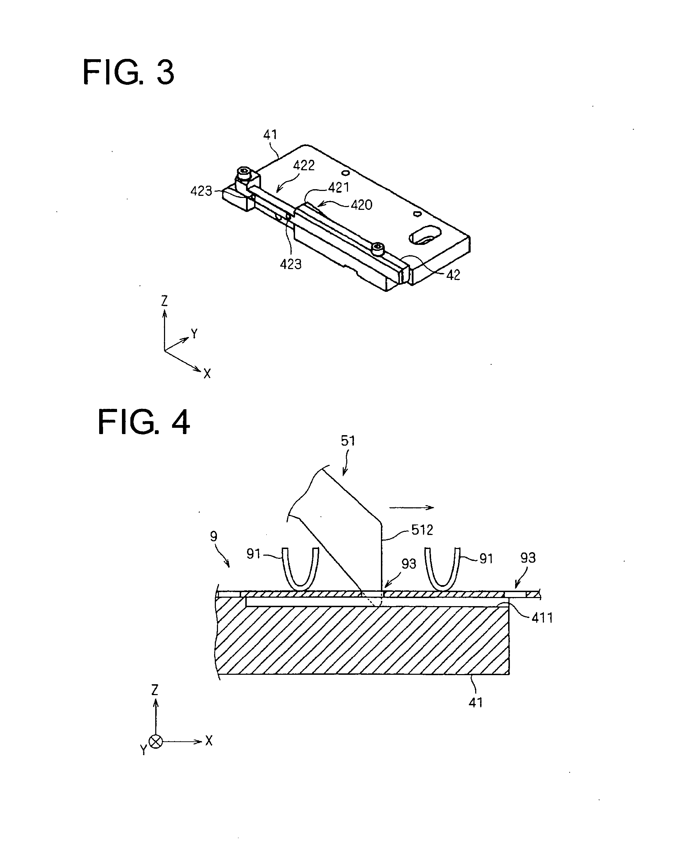

The path defining unit 4 is described with reference to FIG. 3 in addition FIG. 2. FIG. 3 is a schematic perspective view of the path defining unit 4.

The path defining unit 4 includes a stage 41 in the form of a long plate extending toward the crimping unit 2. The upper surface of the stage 41 functions as a guide surface for guiding the series terminal 9 to the crimping unit 2. Specifically, the series terminal 9 is placed on the stage 41 with the chain band 92 faced toward a -Y side, and fed toward the crimping unit 2 (i.e. in the feed direction (+X direction)) when the feeding unit 5 to be described later is driven.

A long feed guide 42 extending along an X axis is provided on a -Y side end edge of the stage 41. The feed guide 42 functions as a regulating member for regulating the series terminal 9 so that the series terminal 9 is not displaced in a Y direction by guiding the chain band 92 of the series terminal 9 on the stage 41. Specifically, the series terminal 9 is fed in a state where the chain band 92 extends along the feed guide 42.

Here, a feed claw 51 (to be described later) reciprocally moved along the X axis is arranged above a +Y side of the feed guide 42, i.e. a passage area for the chain band 92 on the stage 41. A groove 411 extending along the X axis is formed at a position below a movable area of this feed claw 51. This groove 411 functions as a space for allowing the tip of a claw portion 512 inserted into the feed hole 93 to escape as clarified later.

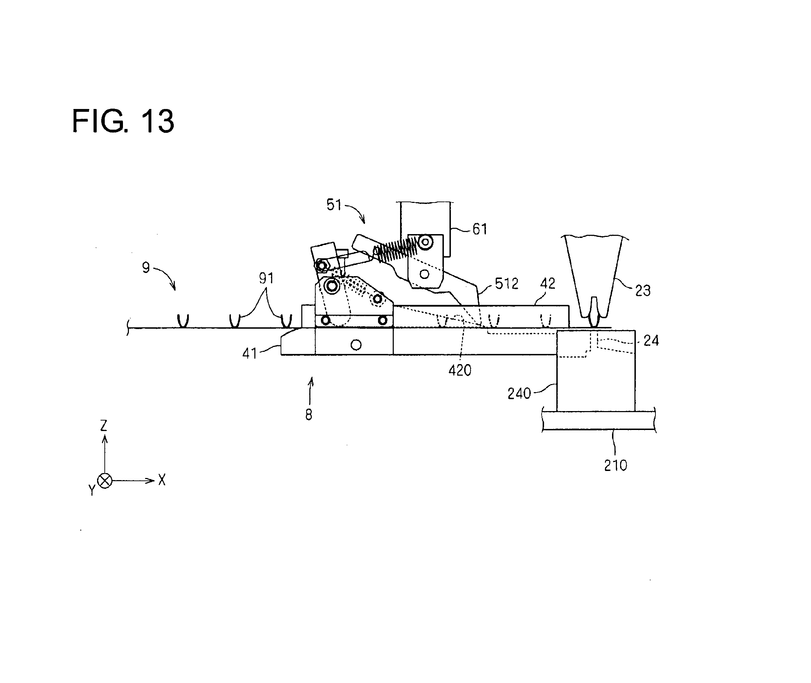

Further, a protruding portion 421 protruding toward the +Y side is formed on a side wall on the +Y side of the feed guide 42. The protruding portion 421 is arranged to extend in a part corresponding to the vicinity of a -X side end part of the movable range of the feed claw 51. This protruding portion 421 functions as a separating wall for separating the feed claw 51 moved to the vicinity of the above end part from the chain band 92. Specifically, the lower surface of the protruding portion 421 extends substantially in parallel to the stage 41 while forming a clearance between this lower surface and the stage 421 through which the chain band 92 can pass, and the upper surface thereof is formed into an inclined surface 420 inclined obliquely upwardly in a -X direction. When reaching the vicinity of the -X side end part in the movable range, the claw portion 512 of the feed claw 51 moved in the -X direction slides up on the inclined surface 420 to be separated from the chain band 92 (see FIG. 13).

Further, a cut portion 422 is formed at a position of the feed guide 42 closer to the -X side than the formation position of the protruding portion 421. The one-sided braking unit 8 (described later) is arranged in this cut portion 422. When a supporting portion 81 of the one-sided braking unit 8 is arranged in the cut portion 422, a main body portion 82 supported on this supporting portion 81 is arranged above the +Y side of the feed guide 42, i.e. the passage area for the chain band 92 on the stage 41.

### <2-3. Sending unit 5>

The feeding unit 5 feeds the terminals 91 of the series terminal 9 placed on the stage 41 one by one toward the crimping unit 2 in conjunction with the crimping operation in the crimping unit 2. Specifically, the feeding unit 5 includes the feed claw 51 and this feed claw 51 is moved in the feed direction (+X direction) while being hooked to the feed hole 93 formed on the chain band 92 of the series terminal 9, whereby the series terminal 9 is fed toward the crimping unit 2.

The feed claw 51 is a long member and arranged above the +Y side of the feed guide 42, i.e. the passage area for the chain band 92 on the stage 41 as described above. Specifically, the feed claw 51 is freely pivotally supported on a lower end part of a pivot member 61 (described later) via a shaft portion 511. Further, the claw portion 512 is provided on one end part of the feed claw 51. The claw portion 512 is formed into such a tapered shape that a length along the X axis becomes shorter toward a tip, and the tip thereof can be hooked to the feed hole 93 formed on the chain band 92 of the series terminal 9 on the stage 41. More specifically, a tip part of the claw portion 512 is formed into such a tapered shape that a side on the +X side (downstream side in the feed direction) is substantially vertical and a side on the -X side (upstream side in the feed direction) is inclined. Thus, the claw portion 512 is hooked to the feed hole 93 only when the feed claw 51 moves in the feed direction (direction toward the anvil 24 along the stage 41; +X direction) and is not hooked to the feed hole 93 by sliding on the chain band 92 when the feed claw 51 moves in a return direction (direction away from the anvil 24 along the stage 41; -X direction) opposite to the feed direction.

A biasing member 52 is coupled and fixed to an end part of the feed claw 51 opposite to the side where the claw portion 512 is provided. The biasing member 52 is, for example, a coil spring here and, in an extended state, one end part thereof is coupled and fixed to the pivot member 61 and the other end part thereof is coupled and fixed to the end part of the feed claw 51. The biasing member 52 biases the claw portion 512 provided on the one end part of the feed claw 51 toward the stage 41. In this way, the claw portion 512 is more reliably hooked to the feed hole 93 when the feed claw 51 moves in the feed direction (+X direction).

As described above, the feed claw 51 is freely pivotally supported on the lower end part of the pivot member 61 via the shaft portion 511. This pivot member 61 pivots in a vertical plane in conjunction with the crimping operation in the crimping unit 2 and, associated with this, the feed claw 51 reciprocally moves in a predetermined movable range along the X axis as clarified later. Here, the feed claw 51 feeds the series terminal 9 by one terminal 91 in the feed direction (+X direction) every time the lower end part of the pivot member 61 makes one reciprocal movement. Specifically, when the lower end part of the pivot member 61 is moved in the +X direction, the claw portion 512 is hooked to the feed hole 93 of the chain band 92 of the series terminal 9 on the stage 41 to feed the series terminal 9 by one terminal 91 in the feed direction (+X direction). On the other hand, when the lower end part of the pivot member 61 is moved in the -X direction, the tip of the feed claw 51 is not hooked to the feed hole 93 of the chain band 92 and only the feed claw 51 is moved in the return direction (-X direction) without retreating the series terminal 9 in the return direction (-X direction).

However, as described above, the protruding portion 421 provided on the feed guide 42 is formed on a part corresponding to the vicinity of the -X side end part of the movable range of the feed claw 51. When reaching the vicinity of the -X side end part in the movable range, the claw portion 512 of the feed claw 51 moved in the -X direction is separated from the chain band 92 by sliding on the inclined surface 420 of the protruding portion 421. That is, the feed claw 51 is completely in a non-contact state with the series terminal 9 on the stage 41 near the -X end part in the movable range thereof (see FIG. 13).

In the feeding unit 5, a mode for suppressing excessive feed of the terminal 91 is realized. This mode is more specifically described with reference to FIG. 4. FIG. 4 is a view of the stage 41 cut along an XZ plane diagrammatically showing a state where the feed claw 51 is feeding the series terminal 9.

As described above, the claw portion 512 of the feed claw 51 is formed into such a tapered shape that the length along the X axis becomes shorter toward the tip. This claw portion 512 is inserted deep into the feed hole 93 up to a position where the claw portion 512 substantially entirely closes the feed hole 93 in a longitudinal direction (direction along an extending direction of the chain band 92) in a state hooked to the feed hole 93. As described above, the stage 41 is formed with the groove 411 extending along the X axis at the position below the movable range of the feed claw 51, and the tip of the claw portion 512 inserted into the feed hole 93 is located in this groove 411. That is, the groove 411 functions as the space for allowing the tip of the claw portion 512 inserted into the feed hole 93 to escape.

As described above, the feed claw 51 feeds the series terminal 9 by one terminal 91 in the feed direction (+X direction) by being moved in the +X direction with the claw portion 512 hooked to the feed hole 93. If the above configuration is adopted, a situation where the series terminal 9 is slightly displaced in the feed direction due to inertial movement is unlikely to occur when the feed claw 51 is stopped. That is, excessive feed of the terminal 91 is unlikely to occur even in the absence of a braking force in the feed direction.

Note that, in addition to (or instead of) an adjustment of the insertion depth of the claw portion 512, the claw portion 512 may be so formed in advance that a length of the tip thereof along the X axis is substantially equal to or slightly smaller than the longitudinal length (length along the extending direction of the chain band 92) of the feed hole 93. Also by this configuration, the claw portion 512 substantially entirely closes the feed hole 93 along the longitudinal direction in the state hooked to the feed hole 93, whereby the suppression of excessive feed of the terminal 91 is realized.

Referring back to FIG. 2, the feeding unit 5 further includes a feed position adjustment bolt 53 for adjusting the position of the feed claw 51 along the X axis with respect to the pivot member 61. By adjusting the position of the feed claw 51 along the X axis with respect to the pivot member 61 by the feed position adjustment bolt 53, the feed position of the terminal 91 can be adjusted. That is, the feed position adjustment bolt 53 functions as an adjustment mechanism for adjusting the feed position of the terminal 91.

An operator of the terminal crimping device 1 adjusts the feed position of the terminal 91 using the feed position adjustment bolt 53 prior to the crimping process of the terminal 91. However, this adjustment needs not be strictly performed and it is sufficient if the feed position of the terminal 91 is at least adjusted to lie in a proper range to be described later.

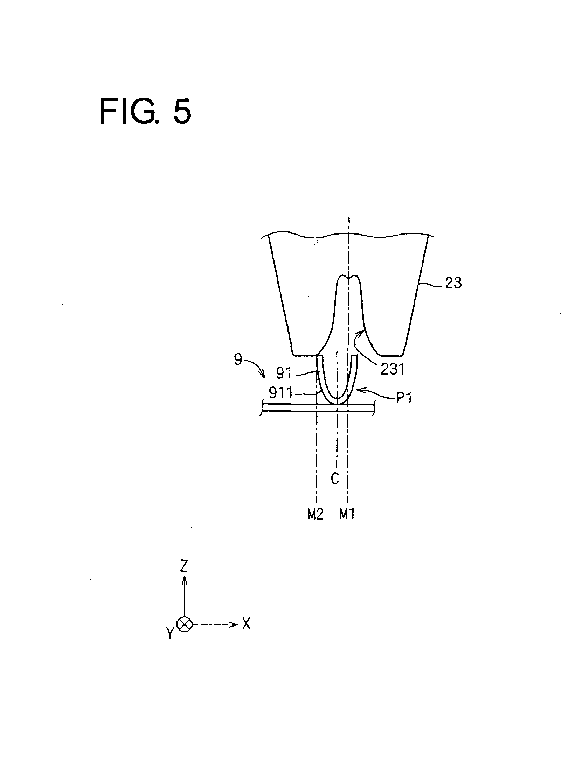

Here, the proper range of the feed position of the terminal 91 is described with reference to FIG. 5. FIG. 5 is a view showing the proper range.

A concave molding surface (concave surface) 231 for constraining the barrel portion 911 of the terminal 91 is formed on the bottom surface of the crimper 23. This concave surface 231 is shaped to be wider toward an opening end in order to easily guide the barrel portion 911. The terminal 91 needs to be fed at least within a range to be constrained by this concave surface 231. Specifically, if a position of the terminal 91 where a -X side end edge of the barrel portion 911 of the terminal 91 is aligned with a -X side end edge M2 of the opening end of the concave surface 231 is referred to as a "-X side maximum displacement position P1" and a position of the terminal 91 where a +X side end edge of the barrel portion 911 of the terminal 91 is aligned with a +X side end edge of the opening end of the concave surface 231 is referred to as a "+X side maximum displacement position" as shown in FIG. 5, the terminal 91 has to be fed to a position within a range closer to the +X side than the - X maximum displacement position P1 and closer to the -X side than the +X maximum displacement position.

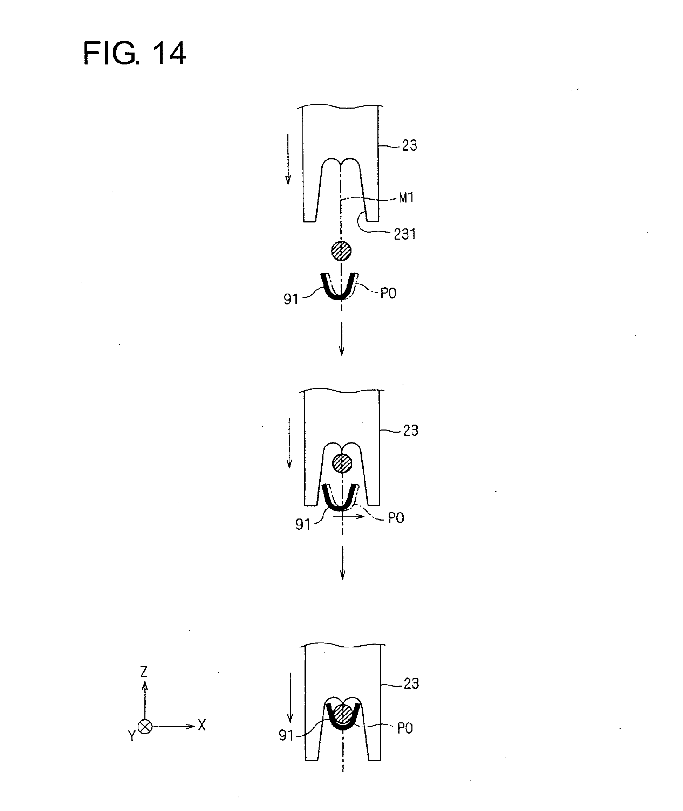

However, the terminal 91 is not necessarily properly crimped even if being fed to a position within the above range. Specifically, in order to properly crimp the terminal 91, the terminal 91 needs to be swaged at such a position where a center C of the barrel portion 911 is aligned with a center axis M1 of the concave surface 231 with respect to the X axis (ideal crimping position P0 (see FIG. 14)). Here, as clarified later, in the terminal crimping device 1, the terminal 91 can be properly crimped even if the terminal 91 to be crimped is fed to a position upstream of (-X side) of the ideal crimping position P0 in the feed direction (i.e. the center C of the barrel portion 911 is displaced toward the -X side from the center axis M1 of the concave surface 231 with respect to the X axis).

Accordingly, in the terminal crimping device 1, a range closer to the +X side than the -X maximum displacement position P1 and closer to the -X side than the ideal crimping position P0 is defined as the proper range of the feed position. That is, in the terminal crimping device 1, the terminal 91 has only to be fed to any position within this proper range. Thus, the feed position of the terminal 91 needs not be strictly adjusted and the adjusting operation is simplified. However, it is necessary to foresee that the feed position of the terminal 91 by the feeding unit 5 has a specific feeding error, and the feed position needs to be adjusted at least considering the above error, so that the terminal 91 is fed to a position within the proper range.

### <2-4. Interlocking Mechanism 6>

The interlocking mechanism 6 is a mechanism for linking the movement of the crimping unit 2 (specifically, upward and downward movements of the shank portion 22) and the movement of the feeding unit 5 (specifically, reciprocating movements of the feed claw 51) and mainly includes the pivot member 61 and a transmitting member 62.

The pivot member 61 is freely pivotally supported on the plate portion 211 via a shaft portion 611 at a position laterally outward of the pair of guide frame pieces 212, 212 and above the stage 41. A center axis of the shaft portion 611 is substantially perpendicular to the feed direction (+X direction) and substantially horizontal with respect to the base 210. This causes the lower end part of the pivot member 61 to pivot along the X axis. Further, the pivot member 61 is formed with a cam groove 612 obliquely inclined downwardly toward the anvil 24.

The transmitting member 62 has one end integrally coupled and fixed to the shank portion 22 and moves upward and downward in conjunction with upward and downward movements of the shank portion 22. The transmitting member 62 extends from this fixed end part toward the cam groove 612 of the pivot member 61 through a groove formed in one guide frame piece 212 and is terminated at a free end part. A protrusion 612 movable in the cam groove 612 is formed on this free end part.

In the above configuration, when the transmitting member 62 moves upward and downward in conjunction with upward and downward movements of the shank portion 22, the upward and downward movements thereof are transmitted as movements for pivoting the pivot member 61 via the protrusion 621 and the cam groove 612. Specifically, when the shank portion 22 is vertically pushed down from an uppermost position, the protrusion 621 is also vertically lowered together with the shank portion 22. Here, the cam groove 612 is curved in the +X direction toward a lower side. Accordingly, as being vertically lowered, the protrusion 621 slides in contact with an inner wall of the cam groove 612 to rotate the pivot member 61 clockwise when viewed in the -Y direction. Then, the lower end part of the pivot member 61 moves in the -X direction and the feed claw 51 attached to this lower end part is moved in the -X direction (return direction) as described above. On the other hand, when the shank portion 22 is vertically pulled up from a lowermost position, the protrusion 621 is vertically elevated together with the shank portion 22. As being vertically elevated, the protrusion 621 slides in contact with the inner wall of the protrusion 621 to rotate the pivot member 61 counterclockwise when viewed in the -Y direction. Then, the lower end part of the pivot member 61 moves in the +X direction and the feed claw 51 attached to this lower end part is moved in the +X direction (feed direction) as described above. As just described, the interlocking mechanism 6 is configured to reciprocally move the feed claw 51 along the X axis in conjunction with upward and downward movements of the shank portion 22.

### <2-5. One-Sided Braking Unit 8>

The one-sided braking unit (braking unit) 8 brakes a movement of the series terminal 9. Specifically, the one-sided braking unit 8 comes into contact with the chain band 92 of the series terminal 9 placed on the stage 41 to brake a movement of the series terminal 9 in the return direction (i.e. direction opposite to the feed direction (+X direction)) (-X direction) at an upstream side (-X side) of the feed claw 51 in the feed direction. However, the one-sided braking unit 8 does not brake a movement of the series terminal 9 in the feed direction. That is, the one-sided braking unit 8 blocks only the movement of the series terminal 9 in the return direction without blocking the movement of the series terminal 9 in the feed direction.

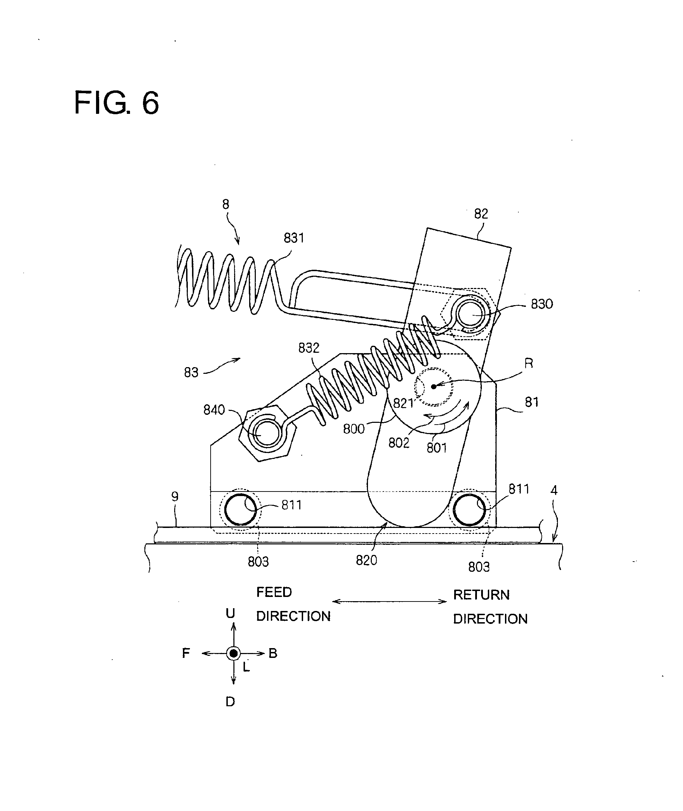

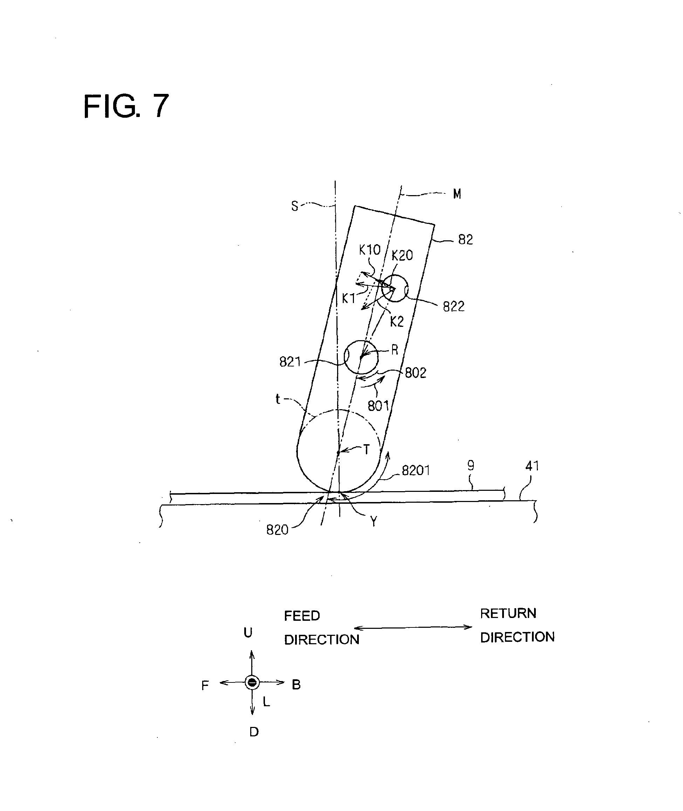

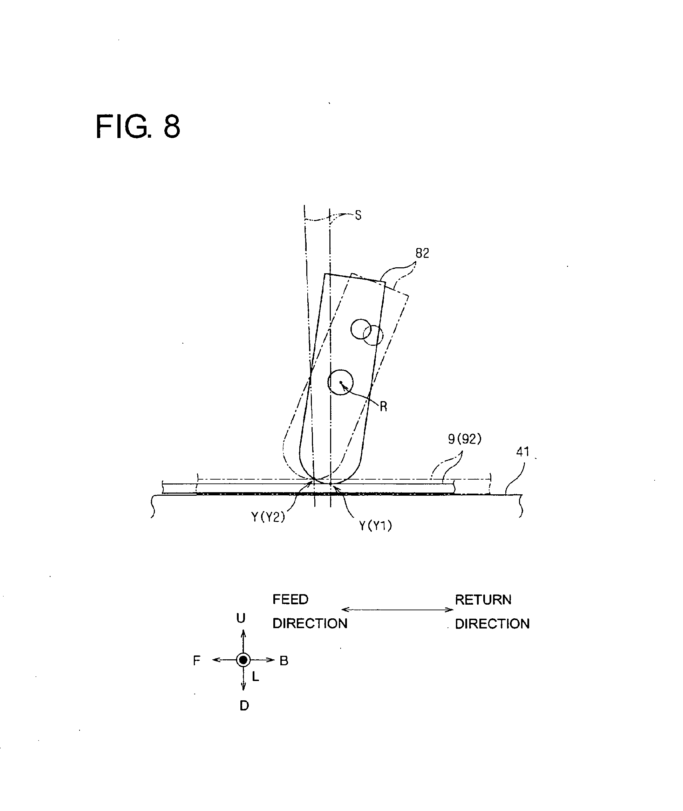

The one-sided braking unit 8 is specifically described with reference to FIGS. 6 to 8 in addition to FIG. 2. FIG. 6 is a side view diagrammatically showing the overall configuration of the one-sided braking unit 8, FIG. 7 is a side view diagrammatically showing the configuration of the main body portion 82 and FIG. 8 is a view showing a state where the main body portion 82 comes into contact with each of series terminals 9 having different thicknesses.

In the following description, a downstream side in the feed direction is referred to as a "front side" and an upstream side in the feed direction (return direction side) is referred to as a rear side in a state where the one-sided braking unit 8 is arranged in the terminal crimping device 1. Further, a side in contact with the series terminal 9 is referred to as a "lower side". Further, a direction perpendicular to a front-back direction and the vertical direction is referred to as a "lateral direction".

### i. Configuration

The one-sided braking unit 8 mainly includes the supporting portion 81, the main body portion 82 and a biasing member 83.

### <Supporting Portion 81 >

The supporting portion 81 is a flat member. The main body portion 82 is freely pivotally supported on a left principal surface of the supporting portion 81. Specifically, the main body portion 82 is, for example, formed with a shaft hole 821, and a fixing screw 800 inserted via this shaft hole 821 is inserted and tightened into a through hole formed in the supporting portion 81. In this way, the main body portion 82 is freely pivotally supported on the supporting portion 81.

The supporting portion 81 supporting the main body portion 82 stands substantially in a vertical posture with respect to the stage 41. Specifically, as shown in FIG. 3, the feed guide 42 is formed with the cut portion 422 in which the supporting portion 81 is to be arranged, and screw holes 423, 423 are formed at two positions on a -Y side wall surface of the feed guide 42 below the cut portion 422. On the other hand, screw holes 811 are provided at positions on a lower part of the supporting portion 81 corresponding to the respective screw holes 423, 423 at two positions formed on the feed guide 42. A screw 803 is inserted into each screw 811 via a washer or the like and tightened into the screw hole 423 of the stage 41, whereby the supporting portion 81 supporting the main body portion 82 is fixed to the stage 41.

### <Main Body Portion 82>

The main body portion 82 is substantially a long flat member and arranged such that a longitudinal direction thereof is aligned with the vertical direction. A shaft hole 821 penetrating in the lateral direction is provided on a principal surface of the main body portion 82. As described above, the fixing screw 800 is inserted and tightened into this shaft hole 821 via the through hole formed on the supporting portion 81, whereby the main body portion 82 is freely pivotally supported on the supporting portion 81. In the following description, a pivot axis (i.e. a center R of the shaft hole 821) of the main body portion 82 is also referred to as a "pivot axis R".

In a state where the main body portion 82 is arranged at a determined position (position upstream of the feed claw 51 in the feed direction) with respect to the stage 41 via the supporting portion 81, a lower surface 820 of the main body portion 82 is arranged to face the series terminal 9 (chain band 92 of the series terminal 9) on the stage 41. The surface 820 of the main body portion 82 facing the series terminal 9 is also referred to as a "facing surface 820".

The facing surface 820 is a surface having no part bent at an acute angle, but having a part bent at an obtuse angle when viewed in a direction perpendicular to the feed direction of the series terminal 9 and a direction normal to the stage 41 (i.e. when viewed in the lateral direction). Particularly in this embodiment, the facing surface 820 is a smooth surface having no angulated part when viewed in the lateral direction. Specifically, the facing surface 820 has a curved surface area arcuately curved along an outer circumference of a virtual circle t when viewed in the lateral direction. Particularly, the facing surface 820 is a curved surface area corresponding to a semi-circular arc here, and the front and rear surfaces of the main body portion 82 are smoothly connected to end parts of the facing surface 820 and extend parallel to each other.

At which position in the facing surface 820 the main body portion 82 is in contact with the series terminal 9 depends on a thickness (plate thickness) of the chain band 92. For example, it is assumed that the main body portion 82 is in contact with the chain band 92 of the series terminal 9 having a certain thickness at a first position Y1 in the facing surface 820 as shown by solid line in FIG. 8. In this case, if the chain band 92 is changed to the one having a larger thickness, the main body portion 82 slightly pivots about the pivot axis R and comes into contact with the series terminal 9 at a second position Y2 located behind the first position Y2 as shown by dashed-dotted line in FIG. 8. That is, the contact position of the main body portion 82 with the series terminal 9 is moved more backward as the thickness of the chain band 92 increases.

Now, a straight line passing through the pivot axis R and the center T of the virtual circle t is referred to as a "reference axis M" and a surface area of the facing surface 820 located behind the reference axis M is referred to as a "target area 8201 ". Such a thickness range of the chain band 92 that the main body portion 82 in an arranged state is in contact with the chain band 92 at least at any position in the target area 8201 is set as a target range and the one-sided braking unit 8 brakes various types of series terminals 9, the thicknesses of chain bands 92 of which are within this target range. That is, the one-sided braking unit 8 can deal with a plurality of types of series terminals 9 having different thicknesses and the like without adjusting the position of the main body portion 82 and the like. A position in contact with the series terminal 9 in the target area 8201 is also referred to as a "contact position Y" below.

As described above, the target area 8201 is a surface area located behind the reference axis M passing through the pivot axis R and the center T of the virtual circle t. Thus, if a virtual plane passing through the contact position Y and extending along the direction normal to the stage 41 is assumed as a reference plane S, the pivot axis R is constantly located behind (i.e. upstream side in the feed direction) the reference plane S.

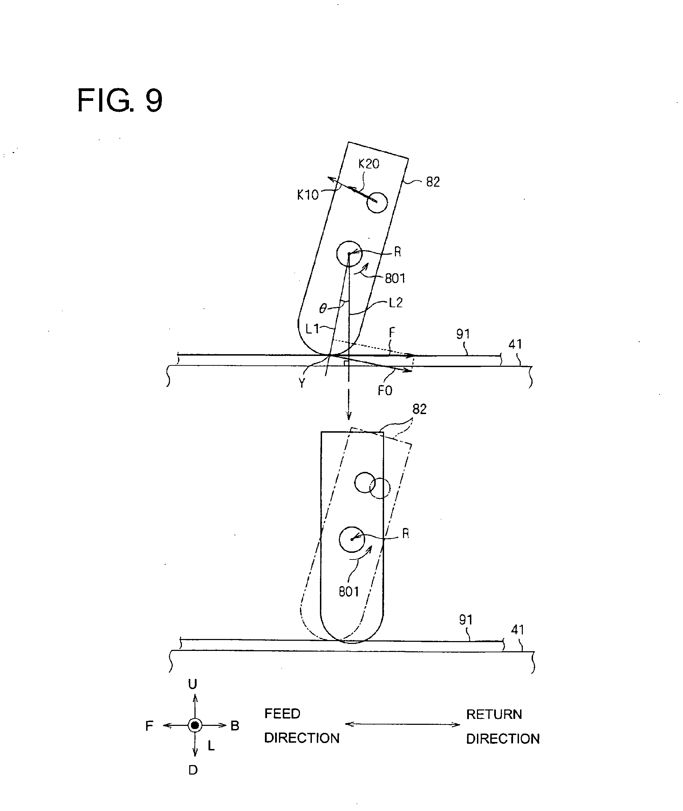

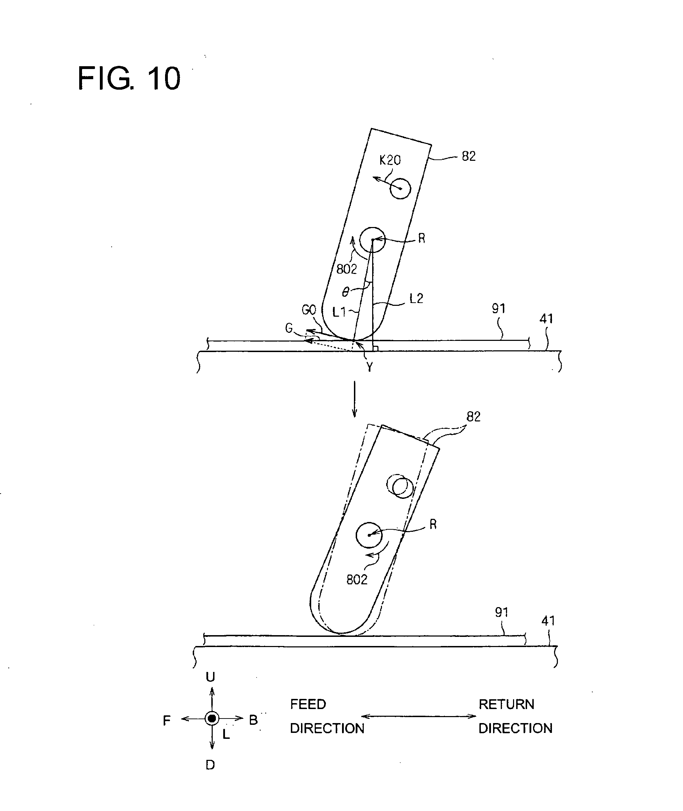

Since the pivot axis R is arranged behind the reference plane S, the target area 8201 moves in a direction toward the series terminal 9 (see FIG. 9) if the main body portion 82 in the arranged state is pivoted about the pivot axis R in a pivot direction to move the facing surface 820 in the return direction (i.e. counterclockwise rotational direction when viewed from left; hereinafter, also referred to as a "first rotational direction 801"). On the other hand, the target area 8201 moves in a direction away from the series terminal 9 (see FIG. 10) if the main body portion 82 is pivoted about the pivot axis R in a pivot direction to move the facing surface 820 in the feed direction (i.e. clockwise rotational direction when viewed from left; hereinafter, also referred to as a "second rotational direction 802").

### <Biasing Member 83>

The biasing member 83 is a member for biasing (e.g. resiliently biasing) the main body portion 82 in the first rotational direction 801. Specifically, the biasing member 83 includes, for example, two resilient members (first resilient member 831 and second resilient member 832) for resiliently biasing the main body portion 82 in the first rotational direction 801. Each resilient member 831, 832 is, for example, configured by a coil spring.

The first and second resilient members 831, 832 function as pressing members for suppressing the separation (floating) of the main body portion 82 from the series terminal 9 and increasing a braking force of the one-sided braking unit 8 by pressing the main body portion 82 against the series terminal 9. However, as clarified later, the magnitude of a resilient force applied to the main body portion 82 by the second resilient member 832 is constant, whereas that of a resilient force applied to the main body portion 82 by the first resilient member 831 varies according to the position of the feed claw 51. This first resilient member 831 also functions as an adjusting member for changing the braking force of the one-sided braking unit 8 according to the position of the feed claw 51.

### a. First Resilient Member 831

A shaft hole 822 is formed above the pivot axis R on the main body portion 82 and a fixing shaft portion 830 is fastened through this shaft hole 822. The first resilient member 831 is arranged, for example, at a right side of the main body portion 82, one end thereof is coupled and fixed to the fixing shaft portion 830 and the other end thereof is coupled and fixed to a shaft portion 5110 provided on the lower end part of the pivot member 61 (see FIG. 2). That is, the one end of the first resilient member 831 is coupled at a position above the pivot axis R on the main body portion 82 and the other end thereof is coupled to the lower end part of the pivot member 61. As described above, the feed claw 51 is held on the lower end part of the pivot member 61 via the shaft portion 511. Thus, the other end of the first resilient member 831 is integrally coupled to the feed claw 51 via the pivot member 61.

Here, the first resilient member 831 is specified to have a natural length at a position where the tip of the feed claw 51 reaches the formation position of the protruding portion 421 (i.e. position where the feed claw 51 starts sliding up on the inclined surface 420 (see FIG. 13)). The tip of the feed claw 51 reaches the formation position of the protruding portion 421 substantially simultaneously with the start of the constraint of the terminal 91 by the concave surface 231 of the crimper 23 in the crimping unit 2. That is, if the position of the feed claw 51 when the constraint of the terminal 91 by the concave surface 231 is started in the crimping unit 2 is referred to as a "specific position", the first resilient member 831 has the natural length in a state where the feed claw 51 is located at this specific position.

Accordingly, the first resilient member 831 has the natural length and a resilient force K1 applied to the main body portion 82 from the first resilient member 831 is zero in a state where the tip of the feed claw 51 is closer to the -X side than the protruding portion 421.

On the other hand, in a state where the tip of the feed claw 51 is closer to the +X side than the protruding portion 421, the first resilient member 831 is in an extended state to be longer than the natural length and a force (resilient force) K1 pulling the main body portion 82 forward is applied at a position above the pivot axis R on the main body portion 82. The larger an X coordinate value of the feed claw 51, the larger this resilient force K1.

Now, if a component of the resilient force K1 of the first resilient member 831 in a direction perpendicular to a straight line connecting a center position of the shaft hole 822 and the pivot axis R is referred to as an "effective component K10", the magnitude of a torque N1 acting on the pivot axis R from the first resilient member 831 is given by a value obtained by multiplying a separation distance between the center position and the pivot axis R by the effective component K10. The main body portion 82 is biased in the first rotational direction 801 by this torque N1. That is, in the state where the tip of the feed claw 51 is closer to the +X side than the protruding portion 421, a force for biasing the main body portion 82 in the first rotational direction 801 is applied to the main body portion 82 from the first resilient member 831.

By being biased in the first rotational direction 801, the main body portion 82 is pressed against the series terminal 9 in a state held in contact with the series terminal 9 (specifically, chain band 92 of the series terminal 9) in at least a part (contact position Y) of the target area 8201 thereof. As described above, the larger the X coordinate value of the feed claw 51, the larger the resilient force K1 applied to the main body portion 82 from the first resilient member 831. Specifically, the larger the X coordinate value of the feed claw 51, the larger the magnitude of the force of the first resilient member 831 for biasing the main body portion 82 in the first rotational direction 801. Thus, the larger the X coordinate value of the feed claw 51, the more strongly the main body portion 82 is pressed against the series terminal 9.

### b. Second Resilient Member 832

A shaft hole is formed before the pivot axis R on the main body portion 82 and a front fixing shaft portion 840 is fastened through this shaft hole. The second resilient member 832 is arranged at a left side of the main body portion 82 (i.e. side opposite to the first resilient member 831 across the supporting portion 81) and, in an extended state, one end thereof is coupled and fixed to the fixing shaft portion 830 and the other end thereof is coupled and fixed to the front fixing shaft portion 840. That is, in the extended state, the one end of the second resilient member 832 is coupled at the position above the pivot axis R on the main body portion 82 and the other end thereof is coupled at a position before (downstream side in the feed direction) the pivot axis R on the supporting portion 81. Thus, a force (resilient force) K2 for pulling the main body portion 82 forward is applied to the position above the pivot axis R on the main body portion 82 from the second resilient member 832.

Now, if a component of the resilient force K2 of the second resilient member 832 in the direction perpendicular to the straight line connecting the center position of the shaft hole 822 and the pivot axis R is referred to as an "effective component K20", the magnitude of a torque N2 acting on the pivot axis R from the second resilient member 832 is given by a value obtained by multiplying the separation distance between the center position and the pivot axis R by the effective component K20. The main body portion 82 is biased in the first rotational direction 801 by this torque N2. That is, a force for biasing the main body portion 82 in the first rotational direction 801 is applied to the main body portion 82 from the second resilient member 832.

By being biased in the first rotational direction 801, the main body portion 82 is pressed against the series terminal 9 in the state held in contact with the series terminal 9 in at least a part of the target area 8201 thereof as described above.

### ii. Braking Mode

As described above, the main body portion 82 in the arranged state is in contact with the series terminal 9 (specifically, chain band 92 of the series terminal 9) in at least a part (contact position Y) of the target area 8201. In this state, the series terminal 9 can move in the feed direction, but cannot move in the return direction. That is, the one-sided braking unit 8 blocks only a movement of the series terminal 9 in the return direction without blocking a movement of the series terminal 9 in the feed direction. A mode of the one-sided braking unit 8 for braking the series terminal 9 is described with reference to FIGS. 9 and 10. FIG. 9 is a view showing a state where the one-sided braking unit 8 brakes the series terminal 9 when the series terminal 9 is going to move in the return direction. FIG. 10 is a view showing a state where the one-sided braking unit 8 does not brake the series terminal 9 when the series terminal 9 is going to move in the feed direction.

### <Case Where the Series Terminal 9 is Going to Move in the Return Direction>

If the series terminal 9 is going to move in the return direction in the state where the main body portion 82 is in contact with the series terminal 9 at the contact position Y, a frictional force (stationary frictional force) F acting in the return direction is applied to the main body portion 82 from the series terminal 9 at the contact position Y. Now, if a component of the frictional force F in a direction perpendicular to a straight line connecting the contact position Y and the pivot axis R is referred to as an "effective component F0", the magnitude of a torque Nf generated at the pivot axis R by the frictional force F is given by a value obtained by multiplying a separation distance between the contact position Y and the pivot axis R by the effective component F0. The main body portion 82 is biased in the first rotational direction 801 by this torque Nf. That is, a force for biasing the main body portion 82 in the first rotational direction 801 is generated on the main body portion 82 by the frictional force F.

Here, dimensions of each part of the main body portion 82 are so adjusted that an angle θ between a straight line L1 connecting the pivot axis R and the contact position Y and a perpendicular L2 to the stage 41 from the pivot axis R is smaller than 90°. Particularly, this angle θ is preferably larger than 0° and not larger than 45°. Further, this angle θ is particularly preferably larger than 0° and not larger than 30°. Furthermore, this angle θ is particularly preferably larger than 2° and not larger than 10°. Further, this angle θ is particularly preferably 5°.

The magnitude of the effective component F0 is given by "F0 = Fcosθ" (where "F" denotes the magnitude of the frictional force F acting in the return direction and applied to the main body portion 82 from the series terminal 9 and "θ" is an angle between the straight line L1 connecting the pivot axis R and the contact position Y and the perpendicular L2 to the stage 41 from the pivot axis R). By setting the angle θ in the above preferable range, a value of "cosθ" becomes a sufficiently large value. That is, the frictional force F applied to the main body portion 82 from the series terminal 9 effectively acts as the torque Nf for rotating the main body portion 82 in the first rotational direction 801 and the sufficiently large torque Nf is applied to the main body portion 82.

Besides the force for biasing the main body portion 82 in the first rotational direction 801 (torque Nf), the force for biasing the main body portion 82 in the rotational direction 801 (torque N2) is also applied to the main body portion 82 from the second resilient member 832 as described above. Further, the force for biasing the main body portion 82 in the first rotational direction 801 (torque N1) is also applied from the first resilient member 831 in the state where the tip of the feed claw 51 is closer to the +X side than the protruding portion 421.

If the sum of these torques Nf, N1 and N2 exceeds a threshold value, the main body portion 82 slightly pivots in the first rotational direction 801 against a reaction force from the series terminal 9. Then, the facing surface 820 is strongly pressed against the chain band 92 (bite-in), thereby braking a movement of the series terminal 9 in the return direction. Particularly, the larger the X coordinate value of the feed claw 51, the larger the resilient force K1 (consequently, torque N1) applied to the main body portion 82 from the first resilient member 831 and the more strongly the main body portion 82 bites in the chain band 92. Specifically, the larger the X coordinate value of the feed claw 51, the larger the braking force of the one-sided braking unit 8.

As described above, in the one-sided braking unit 8, the facing surface 820 is a surface having no part bent at an acute angle, but having a part bent at an obtuse angle (specifically arcuately curved surface). Thus, even if the facing surface 820 is strongly pressed against the series terminal 9, a situation where the series terminal 9 is scraped by this facing surface 820 is unlikely to occur and the generation of metal powder is suppressed.

### <Case Where the Series Terminal 9 is Going to Move in the Feed Direction>

If the series terminal 9 is going to move in the feed direction in the state where the main body portion 82 is in contact with the series terminal 9 at the contact position Y, a frictional force (stationary frictional force) G acting in the feed direction is applied to the main body portion 82 from the series terminal 9 at the contact position Y. Now, if a component of the frictional force G in the direction perpendicular to the straight line connecting the contact position Y and the pivot axis R is referred to as an "effective component G0", the magnitude of a torque Ng generated at the pivot axis R by the frictional force G is given by a value obtained by multiplying the separation distance between the contact position Y and the pivot axis R by the effective component G0. The main body portion 82 is biased in the second rotational direction 802 by this torque Ng. That is, a force for biasing the main body portion 82 in the second rotational direction 802 is generated on the main body portion 82 by the frictional force G.

If the torque Ng exceeds a threshold value, the main body portion 82 slightly pivots in the second rotational direction 802 against the torques N1, N2 applied from the biasing member 83. Then, the facing surface 820 is moved in a direction away from the chain band 92, whereby the series terminal 9 can smoothly move in the feed direction without being blocked by the main body portion 82.

Particularly in the state where the tip of the feed claw 51 is closer to the -X side than the protruding portion 41, a torque applied from the second resilient member 832 for biasing the main body portion 82 in the second rotational direction 802 (torque N1) is zero. Thus, in this state, the main body portion 82 particularly easily pivots in the second rotational direction 802 and the series terminal 9 can particularly smoothly move in the feed direction.

### <3. Operation of Terminal Crimping Device 1>

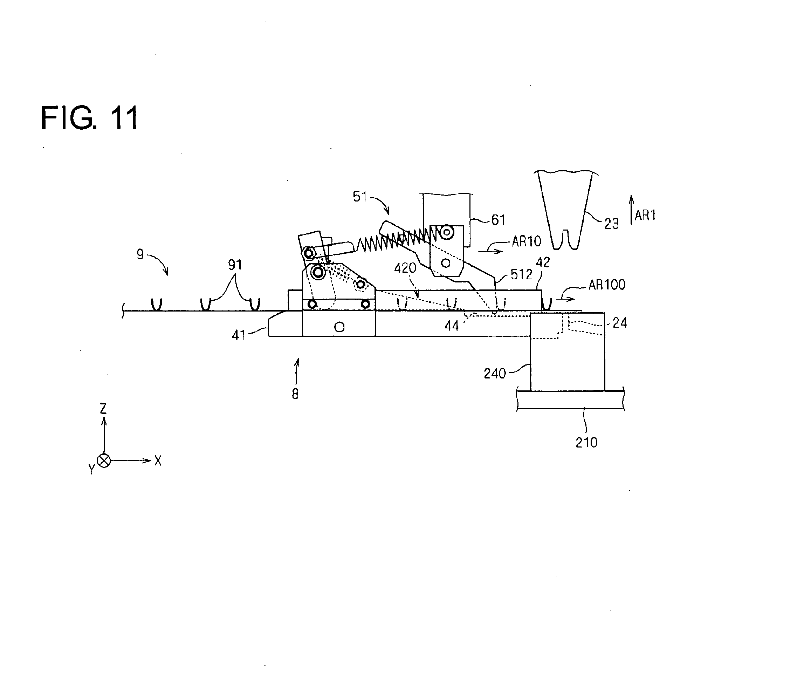

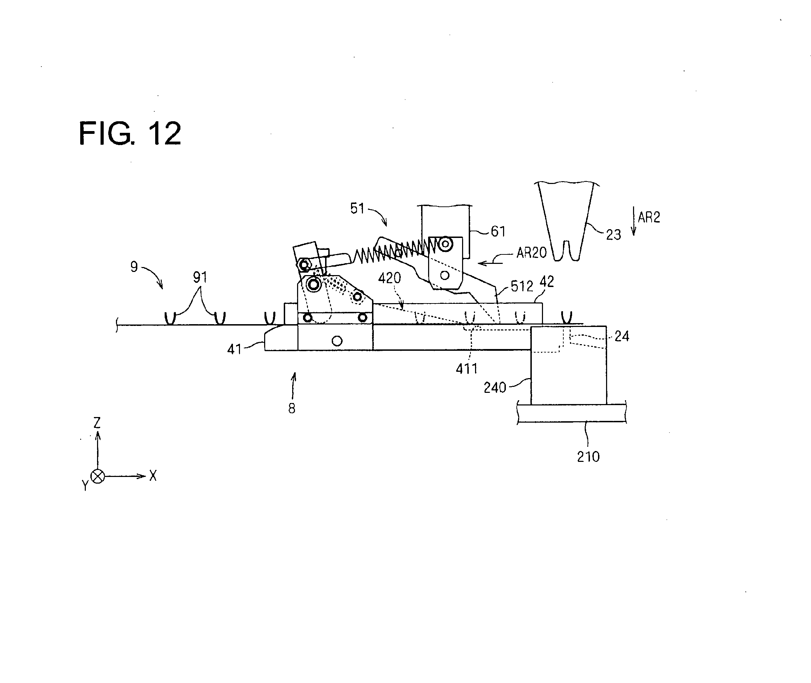

The operation of the terminal crimping device 1 is specifically described with reference to FIGS. 11 to 13. FIG. 11 is a view diagrammatically showing a state where the feed claw 51 is moved in the feed direction. FIG. 12 is a view diagrammatically showing a state where the feed claw 51 is moved in the return direction. FIG. 13 is a view diagrammatically showing a state where the terminal 91 is constrained by the crimper 23. Note that only some of components are diagrammatically shown in FIGS. 11 to 13 for the convenience of description.

When the shank portion 22 (not shown) is pushed up from the lowermost position to the uppermost position, the crimper 23 moves vertically upward (arrow AR1) as shown in FIG. 11. On the other hand, when the shank portion 22 is pushed up from the lowermost position to the uppermost position, the interlocking mechanism 6 moves the feed claw 51 in the +X direction according to this (arrow AR10). As described above, while the feed claw 51 is moved in the +X direction, the claw portion 512 of the feed claw 51 is hooked to the feed hole 93 of the chain band 92 of the series terminal 9 on the stage 41. By moving the feed claw 51 in the +X direction with the claw portion 512 thereof hooked to the feed hole 93, the series terminal 9 is fed by one terminal 91 in the +X direction (arrow AR100). The one-sided braking unit 8 does not brake the movement of the series terminal 9 in the feed direction.

When the shank portion 22 reaches the uppermost position, the feed claw 51 reaches and stops at a position closest to the +X side in the movable range thereof (most downstream position). At this time, a new terminal 91 is arranged at a certain position in the proper range on the anvil 24 (i.e. below the crimper 23). Note that, as described above, the claw portion 512 closes the feed hole 93 substantially entirely in the longitudinal direction with the claw portion 512 hooked to the feed hole 93. Thus, even in the absence of a braking force of the one-sided braking unit 8 in the feed direction, a situation where the series terminal 9 is slightly displaced in the feed direction due to inertial movement (i.e. excessive feed) is unlikely to occur when the feed claw 51 stops.

Subsequently, when the shank portion 22 is vertically pushed down from the uppermost position, the crimper 23 moves vertically downward (arrow AR2) as shown in FIG. 12. On the other hand, when the shank portion 22 is vertically pushed down from the uppermost position, the interlocking mechanism 6 moves the feed claw 51 in the -X direction according to this (arrow AR20). As described above, while the feed claw 51 is moved in the -X direction, the claw portion 512 of the feed claw 51 is not hooked to the feed hole 93 of the chain band 92 of the series terminal 9 on the stage 41 and only the feed claw 51 is moved in the -X direction without retreating the series terminal 9 in the -X direction. Since the one-sided braking unit 8 brakes the movement of the series terminal 9 in the return direction, a situation where the series terminal 9 is displaced in the -X direction following the feed claw 51 does not occur when the feed claw 51 is moved in the -X direction without being hooked to the feed hole 93.

Here, the series terminal 9 is particularly easily displaced immediately after the feed claw 51 starts its return movement. As described above, here, the magnitude of the resilient force K1 (consequently, torque N1) applied to the main body portion 82 from the first resilient member 831 increases with an increase in the X coordinate value of the feed claw 51 and is maximized when the feed claw 51 starts its return movement. That is, the braking force of the one-sided braking unit 8 is maximized when the feed claw 51 starts its return movement. Thus, the occurrence of a situation where the series terminal 9 is displaced in the -X direction following the feed claw 51 can be sufficiently suppressed immediately after the feed claw 51 starts its return movement.

Note that the relatively large resilient force K1 (consequently, torque N1) is applied to the main body portion 82 from the first resilient member 831 when the feed claw 51 starts its return movement, whereby a situation where the series terminal 9 is slightly moved in the feed direction due to inertial movement is also unlikely to occur when the feed claw 51 starts its return movement.

When the shank portion 22 reaches a predetermined position near the lowermost position (lowermost proximate position), the terminal 91 arranged on the anvil 24 is constrained by the concave surface 231 of the crimper 23 as shown in FIG. 13. While the shank portion 22 is further lowered from the lowermost proximate position and reaches the lowermost position, the barrel portion of the terminal 91 is deformed (i.e. the terminal 91 is swaged) between the crimper 23 and the anvil 24 and crimped to an end part of a wire. The feed claw 51 reaches the formation position of the protruding portion 421 substantially simultaneously with the start of the constraint of the terminal 91 by the concave surface 231 of the crimper 23 and, thereafter, slides up on the inclined surface 420 to be separated from the chain band 92. That is, the feed claw 51 and the series terminal 9 are in a completely non-contact state until the terminal 91 is swaged after the constraint of the terminal 91 by the concave surface 231 is started. Thus, during this time, the movement of the terminal 91 to be crimped is not blocked by the feed claw 51.

Further, the first resilient member 831 is released to have the natural length substantially at the same time as the feed claw 51 reaches the formation position of the protruding portion 421 (i.e. substantially at the same time as the constraint of the terminal 91 by the concave surface 231 is started). Thereafter, the resilient force K1 (consequently, torque N1) applied to the main body portion 82 from the first resilient member 831 is zero in the state where the feed claw 51 is at a position closer to the-X side than the formation position of the protruding portion 421. Thus, until the terminal 91 is swaged after the constraint of the terminal 91 by the concave surface 231 is started, the main body portion 82 particularly easily pivots in the second rotational direction 802 to ensure that the series terminal 9 can particularly smoothly move in the feed direction without being blocked by the main body portion 82.

As just described, the movement of the terminal 91 to be crimped in the feed direction is blocked neither by the one-sided braking unit 8 nor by the feed claw 51 until the terminal 91 is crimped after the constraint of the terminal 91 by the concave surface 231 of the crimper 23 is started. Thus, during this time, the terminal 91 is in a state free to move in the feed direction (hereinafter, this state is also referred to as a "one-sided free state").

By setting the terminal 91 in the one-sided free state until the terminal 91 is crimped after the constraint by the concave surface 231 is started, a proper crimping process can be applied to the terminal 91. The reason for that is described with reference to FIG. 14. FIG. 14 is a view showing a state when the crimping process is applied to the terminal 91.

To apply a proper crimping process by crimper 23, the terminal 91 needs to be swaged in a state strictly positioned in alignment with the ideal crimping position P0. This is because, if the terminal 91 is swaged at a position displaced from the center of the concave surface 231, the barrel portion 911 of the terminal 91 is deformed into a bilaterally asymmetrical shape as shown in FIG. 22 and a possibility of an inconvenience such as a crimping failure or a conduction failure increases.

As described above, the terminal 91 fed by the supply unit 3 is fed to a position within the proper range. That is, the terminal 91 is possibly fed to a position displaced toward the -X side from the ideal crimping position P0 within a range where the terminal 91 is reliably constrained by the crimper 23 (upper stage of FIG. 14).

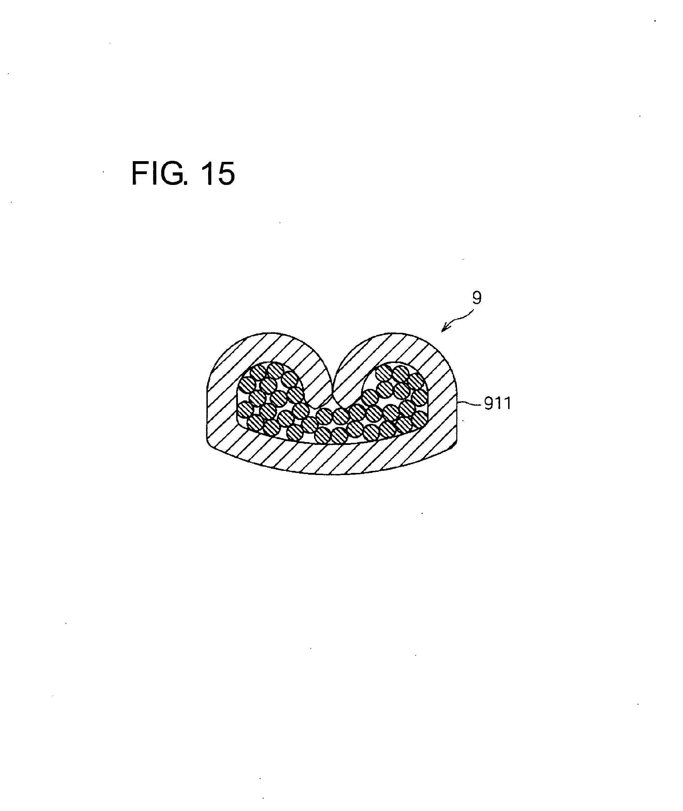

Here, in the above embodiment, the series terminal 9 is in the one-sided free state where it can freely move in the feed direction (+X direction) while the terminal 91 is constrained by the concave surface 231 of the crimper 23 (middle stage of FIG. 14). Thus, even if the terminal 91 is fed to the position displaced toward the -X side from the ideal crimping position P0, the terminal 91 is naturally moved in the feed direction (+X direction) (i.e. naturally moved toward the center of the concave surface 231) by being guided by the inner wall of the concave surface 231 (natural position correction), and finally certainly swaged at the ideal crimping position P0 i.e. in the center of the concave surface 231 (lower stage of FIG. 14) as the crimper 23 is lowered. In the case of swaging in the center of the concave surface 231 in this way, a wound shape of the barrel portion 911 crimped and fixed to the wire is a bilaterally symmetrical shape as shown in FIG. 15. Inconveniences such as a crimping failure and a conduction failure are unlikely to occur in the terminal 91 crimped and fixed to the wire in such a proper shape. Further, since the terminal 91 is in the one-sided free state when being swaged in the above embodiment, a relationship between the barrel portion 911 and a terminal portion is easily properly maintained in the terminal 91 crimped and fixed to the wire. Specifically, a torsion amount (rolling) of the barrel portion 911 with respect to the terminal portion is suppressed low. Further, a lateral bending amount (twist) of the barrel portion 911 with respect to the terminal portion is also suppressed low. Further, a displacement amount in the front-back direction of the barrel portion 911 with respect to the terminal portion is also suppressed low. Further, a vertical displacement amount of the barrel portion 911 with respect to the terminal portion is also suppressed low. As just described, in the terminal crimping device 1, a proper crimping process can be applied to the terminal 91 by setting the series terminal 9 in the one-sided free state while the terminal 91 is swaged.

### <4. Effects>

As described above, according to the first embodiment, the one-sided braking unit 8 brakes the movement of the series terminal 9 in the return direction without braking the movement of the series terminal 9 in the feed direction. According to this configuration, as described above, the terminal 91 can be swaged at the ideal crimping position and a proper crimping process can be applied to the terminal 91 even if the terminal 91 to be crimped is fed to a position upstream of the ideal crimping position P0 in the feed direction.

Further, in the first embodiment, the facing surface 820 of the main body portion 82 of the one-sided braking unit 8 is a surface having no part bent at an acute angle, but having a part bent at an obtuse angle when viewed in the lateral direction (i.e. direction perpendicular to the feed direction of the series terminal 9 and the direction normal to the stage 41). Thus, even if the facing surface 820 is pressed against the series terminal 9, a situation where the series terminal 9 (specifically, chain band 92) is scraped by this facing surface 820 is unlikely to occur and the generation of metal powder is suppressed. If metal powder is generated, it may enter between the terminal and the die or between the terminal and the wire when the terminal is swaged and crimped to the wire by the die and the terminal may not be properly crimped to the wire. However, since the generation of metal powder is suppressed here, the occurrence of such a situation is suppressed and a proper crimping process can be applied to the terminal 91.

Further, according to the first embodiment, the angle θ between the straight line L1 connecting the pivot axis R and the contact position Y and the perpendicular L2 to the stage 41 from the pivot axis R is larger than 0° and not larger than 45°. According to this configuration, as described above, the frictional force F applied to the main body portion 82 from the series terminal 9 effectively acts as the torque Nf for rotating the main body portion 82 in the first rotational direction 801 when the series terminal 9 is going to move in the return direction, whereby the movement of the series terminal 9 in the return direction can be sufficiently braked. Particularly, if this angle θ is larger than 2° and not larger than 10°, the movement of the series terminal 9 in the return direction can be particularly sufficiently braked.

Further, according to the first embodiment, the arcuate curved surface area is included in the facing surface 820 of the one-sided braking unit 8. According to this configuration, the main body portion 82 can come into contact with the series terminal 9 at different positions of this curved surface area by pivoting according to the thickness of the series terminal 9. In this way, for each of various series terminals having different thicknesses, a movement in the return direction can be braked while a movement in the feed direction is not braked. Specifically, various series terminals having different thicknesses can be targets for braking.

Further, according to the first embodiment, the biasing member 83 is provided to bias the main body portion 82 in such a pivot direction (first rotational direction 801) as to move the facing surface 820 in the return direction. According to this configuration, the separation (floating) of the facing surface 820 from the series terminal 9 can be sufficiently suppressed and the braking force of the one-sided braking unit 8 can be increased by causing the facing surface 820 to sufficiently bite into the series terminal 9.

Further, according to the first embodiment, the claw portion 512 closes the feed hole 93 over the entire width along the feed direction with the feed claw 52 hooked to the feed hole 93. According to this configuration, excessive feed of the terminal 91 is unlikely to occur.

Further, according to the first embodiment, the feed claw 51 is in a non-contact state with the series terminal 9 until the terminal 91 is swaged after being constrained by the concave surface 231 of the crimper 23 in the crimping unit 2. According to this configuration, as described above, the movement of the terminal 91 to be crimped is not blocked by the feed claw 51 until the terminal 91 is swaged after being constrained by the concave surface 231. Thus, the terminal 91 fed to a position upstream of (-X side) the ideal crimping position P0 in the feed direction can particularly smoothly move to the ideal crimping position P0.

### <II. Second Embodiment<>

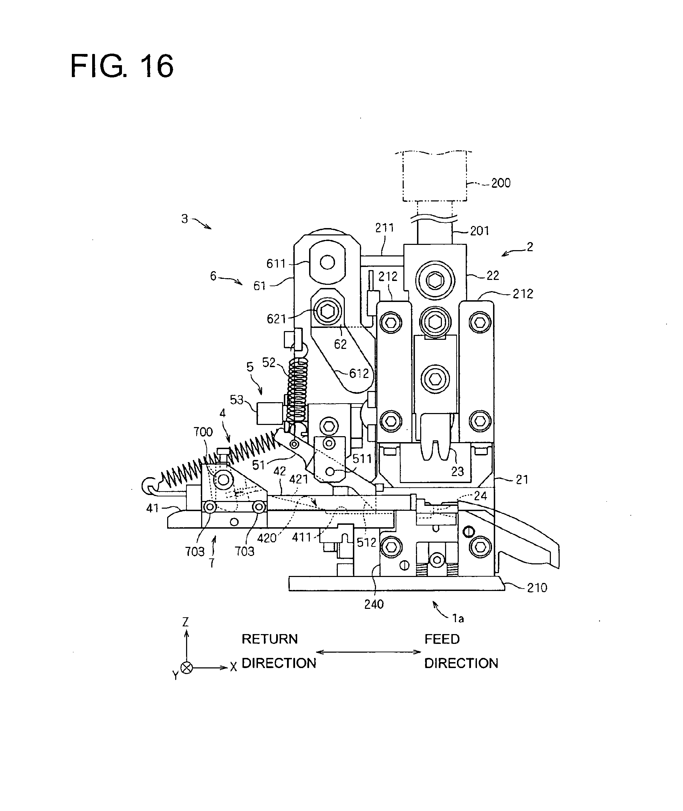

A terminal crimping device 1 a according to a second embodiment is described. FIG. 16 is a schematic front view of the terminal crimping device 1a according to the second embodiment. The terminal crimping device 1 a has the same configuration as the terminal crimping device 1 according to the first embodiment except for the configuration of the one-sided braking unit. Further, the operation of the terminal crimping device 1 a is similar to that of the terminal crimping device 1 according to the first embodiment.

### <1. One-Sided Braking Unit 7>

A one-sided braking unit (braking unit) 7 provided in the terminal crimping device 1 a brakes a movement of a series terminal 9 similarly to the one-sided braking unit 8 according to the above embodiment. Specifically, the one-sided braking unit 7 brakes a movement of the series terminal 9 in a return direction (i.e. direction opposite to a feed direction (+X direction)) (-X direction) by coming into contact with a chain band 92 of the series terminal 9 placed on a stage 41 on a side upstream of a feed claw 51 (-X side) in the feed direction similarly to the one-sided braking unit 8 according to the above embodiment. However, the one-sided braking unit 7 does not brake a movement of the series terminal 9 in the feed direction. That is, the one-sided braking unit 7 blocks only the movement of the series terminal 9 in the return direction without blocking the movement of the series terminal 9 in the feed direction.

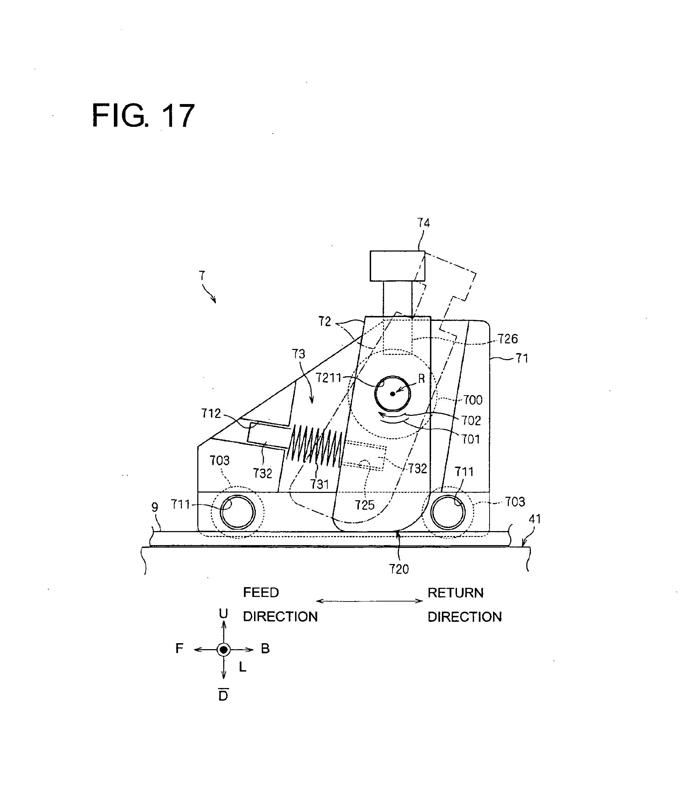

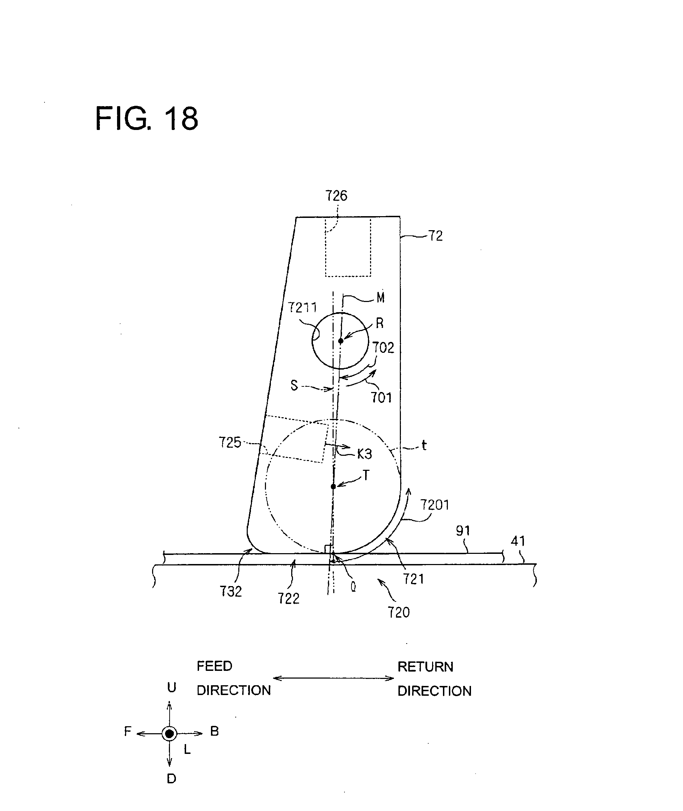

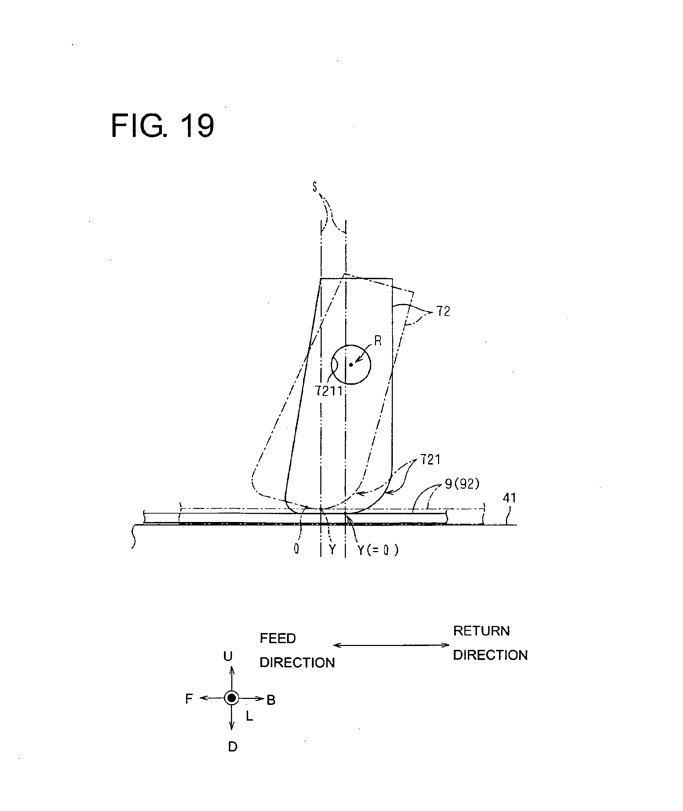

The one-sided braking unit 7 is specifically described with reference to FIGS. 17 to 19 in addition to FIG. 16. FIG. 17 is a side view diagrammatically showing the overall configuration of the one-sided braking unit 7. FIG. 18 is a side view diagrammatically showing the configuration of a main body portion 72. FIG. 19 is a view showing a state where the main body portion 72 comes into contact with each of series terminals 9 having different thicknesses.

In the following description, a downstream side in the feed direction is referred to as a "front side" and an upstream side in the feed direction (return direction side) is referred to as a rear side in a state where the one-sided braking unit 7 is arranged in the terminal crimping device 1. Further, a side in contact with the series terminal 9 is referred to as a "lower side". Further, a direction perpendicular to a front-back direction and a vertical direction is referred to as a "lateral direction".

### i. Configuration

The one-sided braking unit 7 mainly includes a supporting portion 71, the main body portion 72, a biasing member 73 and a release lever 74.

### <Supporting Portion 71 >

The supporting portion 71 is a flat member. The main body portion 72 is freely pivotally supported on a left principal surface of the supporting portion 71. Specifically, a through hole is formed on a principle surface of the supporting portion 71 and a fixing screw 700 inserted via this through hole is inserted and tightened into a shaft hole 7211 of the main body portion 72. In this way, the main body portion 72 is freely pivotally supported on the supporting portion 71.

The supporting portion 71 supporting the main body portion 72 stands substantially in a vertical posture with respect to the stage 41. Specifically, as shown in FIG. 3, a feed guide 42 is formed with a cut portion 422 in which the supporting portion 71 is to be arranged, and screw holes 423, 423 are formed at two positions on a -Y side wall surface of the feed guide 42 below the cut portion 422. On the other hand, screw holes 711 are provided at positions on a lower part of the supporting portion 71 corresponding to the respective screw holes 423, 423 at two positions formed on the feed guide 42. A screw 703 is inserted into each screw hole 711 via a washer or the like and tightened into the screw hole 423 of the stage 41, whereby the supporting portion 71 supporting the main body portion 72 is fixed to the stage 41.

### <Main Body Portion 72>

The main body portion 72 is substantially a long flat member and arranged such that a longitudinal direction thereof is aligned with the vertical direction. The shaft hole 7211 penetrating in the lateral direction is provided on a principal surface of the main body portion 72. As described above, the fixing screw 700 is inserted and tightened into this shaft hole 7211 via the through hole formed on the supporting portion 71, whereby the main body portion 72 is freely pivotally supported on the supporting portion 71. In the following description, a pivot axis (i.e. a center R of the shaft hole 7211) of the main body portion 72 is also referred to as a "pivot axis R".

In a state where the main body portion 72 is arranged at a determined position with respect to the stage 41 via the supporting portion 71 (hereinafter, also referred to as an arranged state), a lower surface 720 of the main body portion 72 is arranged to face the series terminal 9 (specifically, chain band 92 of the series terminal 9) on the stage 41. The surface 720 of the main body portion 72 facing the series terminal 9 is also referred to as a "facing surface 720".

The facing surface 720 is a surface having no part bent at an acute angle, but having a part bent at an obtuse angle when viewed in a direction perpendicular to the feed direction of the series terminal 9 and a direction normal to the stage 41 (i.e. when viewed in the lateral direction). Particularly in this embodiment, the facing surface 720 is a smooth surface having no angulated part when viewed in the lateral direction. Specifically, the facing surface 720 has a curved surface area (rear curved surface area) 721 arcuately curved along an outer circumference of a virtual circle t when viewed in the lateral direction. Particularly, the rear curved surface area 721 is a curved surface area corresponding to a quarter-circular arc here. The rear end of the rear curved surface area 721 is smoothly connected to the rear surface of the main body portion 72, and the front end of the rear curved area 721 is smoothly connected to the rear end of a flat surface area 722. That is, the flat surface area 722 connected to the rear curved surface area 721 is formed downstream of the rear curved surface area 721 in the feed direction on the facing surface 720. The front end of the flat surface area 722 is smoothly connected to the rear end of a curved surface area (front curved surface area) 723 arcuately curved when viewed in the lateral direction. The front end of the front curved surface area 723 is smoothly connected to the front surface of the main body portion 72. The front surface of the main body portion 72 is so inclined to come closer to the rear surface toward an upper side. That is, the front and rear surfaces of the main body portion 72 extend in a non-parallel manner.

At which position in the facing surface 720 the main body portion 72 is in contact with the series terminal 9 depends on a thickness (plate thickness) of the chain band 92. For example, it is assumed that the main body portion 72 is in contact with the chain band 92 of the series terminal 9 having a certain thickness at a front end edge Q of the rear curved surface area 721 (i.e. boundary between the rear curved surface area 721 and the flat surface area 722) and in the entire flat surface area 722 as shown by solid line in FIG. 19. In this case, if the chain band 92 is changed to the one having a larger thickness, the main body portion 72 slightly pivots about the pivot axis R and comes into contact with the series terminal 9 at a position located behind the end edge Q (i.e. any position in the rear curved surface area 721) as shown by dashed-dotted line in FIG. 19. That is, the contact position of the main body portion 72 with the series terminal 9 is moved more backward as the thickness of the chain band 92 increases.

Now, a straight line passing through the pivot axis R and the center T of the virtual circle t is referred to as a "reference axis M" and a surface area of the facing surface 720 located behind the reference axis M is referred to as a "target area 7201". At this time, an intersection of the facing surface 720 and the reference axis M is specified to pass before the boundary Q between the rear curved surface area 721 and the flat surface area 722. Thus, the target area 7201 is an area including at least the rear curved surface area 721 and the boundary Q. Such a thickness range of the chain band 92 that the main body portion 72 in the arranged state is in contact with the chain band 92 at least at any position in the target area 7201 is set as a target range and the one-sided braking unit 7 brakes various types of series terminals 9, the thicknesses of chain bands 92 of which are within this target range. That is, the one-sided braking unit 7 can deal with a plurality of types of series terminals 9 having different thicknesses and the like without adjusting the position of the main body portion 72. A position in contact with the series terminal 9 in the target area 7201 is also referred to as a "contact position Y" below.

As described above, the target area 7201 is a surface area located behind the reference axis M passing through the pivot axis R and the center T of the virtual circle t. Thus, if a virtual plane passing through the contact position Y and extending along the direction normal to the stage 41 is assumed as a reference plane S, the pivot axis R is constantly located behind (i.e. upstream side in the feed direction) the reference plane S.

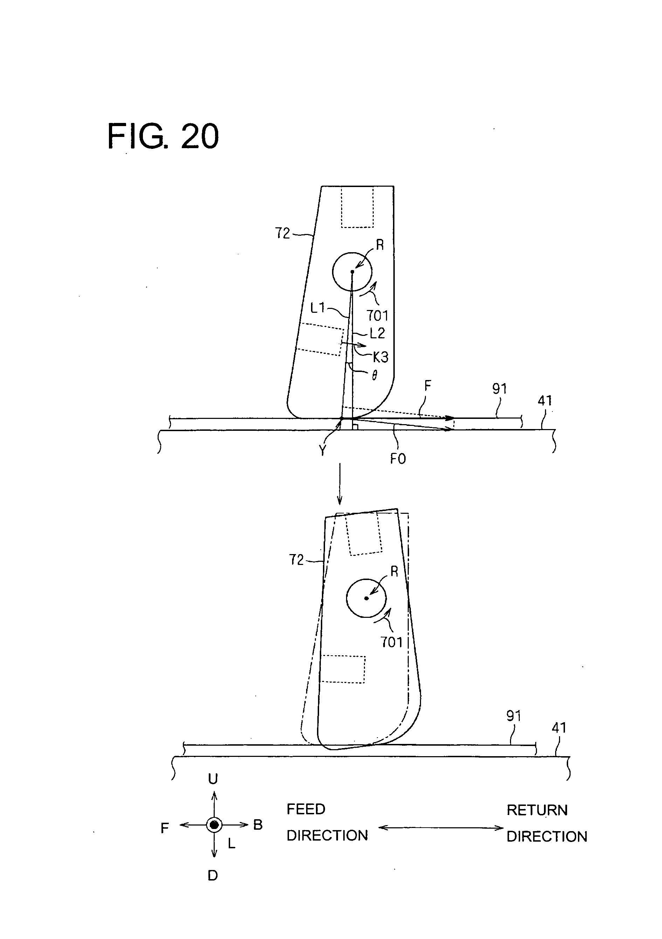

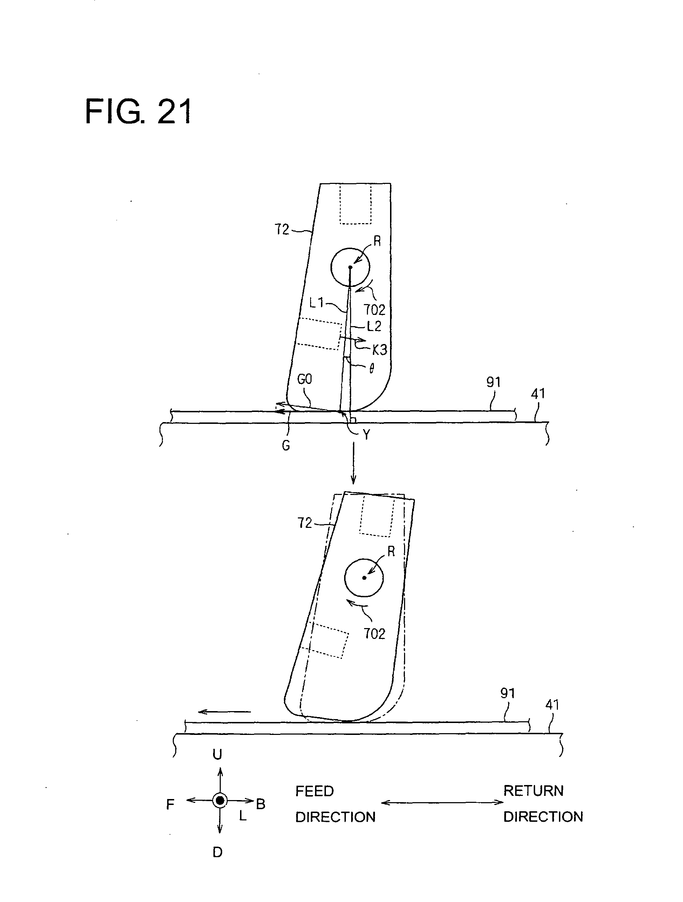

Since the pivot axis R is arranged behind the reference plane S, the target area 7201 moves in a direction toward the series terminal 9 (see FIG. 20) if the main body portion 72 in the arranged state is pivoted about the pivot axis R in a pivot direction to move the facing surface 720 in the return direction (i.e. counterclockwise rotational direction when viewed from left; hereinafter, also referred to as a "first rotational direction 701"). On the other hand, the target area 7201 moves in a direction away from the series terminal 9 (see FIG. 21) if the main body portion 72 is pivoted about the pivot axis R in a pivot direction to move the facing surface 720 in the feed direction (i.e. clockwise rotational direction when viewed from left; hereinafter, also referred to as a "second rotational direction 702").

### <Biasing Member 73>

The biasing member 73 is a member for biasing (e.g. resiliently biasing) the main body portion 72 in the first rotational direction 701. The biasing member 73 includes a resilient member 731 for resiliently biasing the main body portion 72 in the first rotational direction 701. The resilient member 731 is, for example, configured by a coil spring. The resilient member 731 functions as a pressing member for suppressing the separation (floating) of the main body portion 72 from the series terminal 9 and increasing a braking force of the one-sided braking unit 7 by pressing the main body portion 72 against the series terminal 9.

A rear accommodation hole 725 is formed at a position on the front surface of the main body portion 72 below the pivot axis R. Further, a front accommodation hole 712 facing the rear accommodation hole 725 is formed at a position of the supporting portion 71 before the pivot axis R. In a shortened state of the resilient member 731, a supporting bar 732 coupled and fixed to one end of the resilient member 731 is accommodated in the rear accommodation hole 725 and a supporting bar 732 coupled and fixed to the other end of the resilient member 731 is accommodated in the front accommodation hole 712. That is, in the shortened state of the resilient member 731, the one end is coupled at a position of the main body portion 72 below the pivot axis R, and the other end is coupled at a position of the supporting portion 71 before (downstream side in the feed direction) the pivot axis R. Thus, a force (resilient force) K3 for pushing the main body portion 72 backward is applied to a position of the main body portion 72 below the pivot axis R from the resilient member 731.

Now, if a contact position of the resilient member 731 and the main body portion 72 (specifically, bottom part of the rear accommodation hole 725) is referred to as an action position, the resilient member 731 is, for example, provided in a posture extending in parallel to a direction perpendicular to a straight line connecting the action position and the pivot axis R and the resilient force K3 of the resilient member 731 acts in the direction perpendicular to the straight line connecting the action position and the pivot axis R. In this case, the magnitude of a torque N3 acting on the pivot axis R from the resilient member 731 is given by a value obtained by multiplying a separation distance between the action position and the pivot axis R by the magnitude of the resilient force K3. The main body portion 72 is biased in the first rotational direction 701 by this torque N3. That is, a force for biasing the main body portion 72 in the first rotational direction 701 is applied to the main body portion 72 from the resilient member 731.

By being biased in the first rotational direction 701, the main body portion 72 is pressed against the series terminal 9 in a state held in contact with the series terminal 9 (specifically, chain band 92 of the series terminal 9) in at least a part (contact position Y) of the target area 7201 thereof.

### <Release Lever 74>

The release lever 74 is a member for releasing a braking state of the main body portion 72. The release lever 74 is specifically a substantially bar-like long member, has one end thereof fastened and fixed to a screw hole 726 formed on an upper end surface of the main body portion 72 (i.e. surface opposite to the facing surface 720 across the pivot axis R) and extends upward from this fixed end part and a free end part projects upwardly from the supporting portion 71.

As described above, in the arranged state, the facing surface 720 of the main body portion 72 is pressed against the series terminal 9 upon receiving a biasing force of the biasing member 73 and the main body portion 72 is in contact with the series terminal 9 at the contact position Y. In this state, when the release lever 74 is inclined backwardly, the main body portion 72 pivots in a direction against the biasing force of the biasing member 73 (i.e. second rotational direction 702) and the facing surface 720 is separated from the series terminal 9 (state shown by dashed-dotted line in FIG. 17).

### ii. Braking Mode

As described above, the main body portion 72 in the arranged state is in contact with the series terminal 9 (specifically, chain band 92 of the series terminal 9) in at least a part (contact position Y) of the target area 7201. In this state, the series terminal 9 can move in the feed direction, but cannot move in the return direction. That is, the one-sided braking unit 7 blocks only a movement of the series terminal 9 in the return direction without blocking a movement of the series terminal 9 in the feed direction. A mode of the one-sided braking unit 7 for braking the series terminal 9 is described with reference to FIGS. 20 and 21. FIG. 20 is a view showing a state where the one-sided braking unit 7 brakes the series terminal 9 when the series terminal 9 is going to move in the return direction. FIG. 21 is a view showing a state where the one-sided braking unit 7 does not brake the series terminal 9 when the series terminal 9 is going to move in the feed direction.

### <Case Where the Series Terminal 9 is Going to Move in the Return Direction>

If the series terminal 9 is going to move in the return direction in the state where the main body portion 72 is in contact with the series terminal 9 at the contact position Y, a frictional force (stationary frictional force) F acting in the return direction is applied to the main body portion 72 from the series terminal 9 at the contact position Y. Now, if a component of the frictional force F in a direction perpendicular to a straight line connecting the contact position Y and the pivot axis R is referred to as an "effective component F0", the magnitude of a torque Nf generated at the pivot axis R by the frictional force F is given by a value obtained by multiplying a separation distance between the contact position Y and the pivot axis R by the effective component F0. The main body portion 72 is biased in the first rotational direction 701 by this torque Nf. That is, a force for biasing the main body portion 72 in the first rotational direction 701 is generated on the main body portion 72 by the frictional force F.

Here, dimensions of each part of the main body portion 72 are so adjusted that an angle θ between a straight line L1 connecting the pivot axis R and the contact position Y and a perpendicular L2 to the stage 41 from the pivot axis R is smaller than 90°. Particularly this angle θ is preferably larger than 0° and not larger than 45°. Further, this angle θ is particularly preferably larger than 0° and not larger than 30°. Furthermore, this angle θ is particularly preferably larger than 2° and not larger than 10°. Further, this angle θ is particularly preferably 5°.

The magnitude of the effective component F0 is given by "F0 = Fcosθ" (where "F" denotes the magnitude of the frictional force F acting in the return direction and applied to the main body portion 72 from the series terminal 9 and "θ" is an angle between the straight line L1 connecting the pivot axis R and the contact position Y and the perpendicular L2 to the stage 41 from the pivot axis R). By setting the angle θ in the above preferable range, a value of "cosθ" becomes a sufficiently large value. That is, the frictional force F applied to the main body portion 72 from the series terminal 9 effectively acts as the torque Nf for rotating the main body portion 72 in the first rotational direction 701 and the sufficiently large torque Nf is applied to the main body portion 72.

Besides the force for biasing the main body portion 72 in the first rotational direction 701 (torque Nf), the force for biasing the main body portion 72 in the rotational direction 701 (torque N3) is also applied to the main body portion 72 from the resilient member 731 as described above.

If the sum of these torques Nf and N3 exceeds a threshold value, the main body portion 72 slightly pivots in the first rotational direction 701 against a reaction force from the series terminal 9. Then, the facing surface 720 is strongly pressed against the chain band 92 (bite-in), thereby braking a movement of the series terminal 9 in the return direction. Particularly, if the contact position Y is aligned with the front end edge Q (or its vicinity) of the rear curved surface area 721, the flat surface area 722 is strongly pressed against the chain band 92, whereby the movement of the series terminal 9 in the return direction is particularly sufficiently braked.

As described above, in the one-sided braking unit 7, the facing surface 720 is a surface having no part bent at an acute angle, but having a part bent at an obtuse angle. Thus, even if the facing surface 720 is strongly pressed against the series terminal 9, a situation where the series terminal 9 is scraped by this facing surface 720 is unlikely to occur and the generation of metal powder is suppressed.

### <Case Where the Series Terminal 9 is Going to Move in the Feed Direction>

If the series terminal 9 is going to move in the feed direction in the state where the main body portion 72 is in contact with the series terminal 9 at the contact position Y, a frictional force (stationary frictional force) G acting in the feed direction is applied to the main body portion 72 from the series terminal 9 at the contact position Y. Now, if a component of the frictional force G in the direction perpendicular to the straight line connecting the contact position Y and the pivot axis R is referred to as an "effective component G0", the magnitude of a torque Ng generated at the pivot axis R by the frictional force G is given by a value obtained by multiplying the separation distance between the contact position Y and the pivot axis R by the effective component G0. The main body portion 72 is biased in the second rotational direction 702 by this torque Ng. That is, a force for biasing the main body portion 72 in the second rotational direction 702 is generated on the main body portion 72 by the frictional force G.

If the torque Ng exceeds a threshold value, the main body portion 72 slightly pivots in the second rotational direction 702 against the torque N3 applied from the biasing member 73. Then, the facing surface 720 is moved in a direction away from the chain band 92, whereby the series terminal 9 can smoothly move in the feed direction without being blocked by the main body portion 72.

### <2. Effects>

Also in the second embodiment, the following effects are obtained in addition to effects similar to those of the first embodiment.

Specifically, according to the second embodiment, the flat surface area 722 connected to the rear curved surface area 721 is formed downstream of the rear curved surface area 721 in the feed direction on the facing surface 720 of the one-sided braking unit 7. According to this configuration, the series terminal 9 is pressed by the entire flat surface area 722, thereby sufficiently braking the movement of the series terminal 9 in the return direction, when the facing surface 720 and the series terminal 9 come into contact in the flat surface area 722.

Further, according to the second embodiment, the facing surface 720 and the series terminal 9 can be separated by operating the release lever 74 of the one-sided braking unit 7 to pivot the main body portion 72 in such a pivot direction (second rotational direction 702) as to move the facing surface 720 in the feed direction. Thus, the braked state of the series terminal 9 can be easily released if necessary.

### <III. Modifications>

In each of the above embodiments, the configuration of the one-sided braking unit 7, 8 is not necessarily limited to the illustrated one. For example, in the one-sided braking unit 8 according to the first embodiment, the resilient member 731 according to the second embodiment may be provided instead of at least one of the first and second resilient members 831, 832 (or in addition to these). Conversely, in the one-sided braking unit 7 according to the second embodiment, at least one of the first and second resilient members 831, 832 according to the first embodiment may be provided instead of (or in addition to) the resilient member 731. Further, for example, the release lever 74 according to the second embodiment may be additionally provided in the one-sided braking unit 8 according to the first embodiment.

Further, in each of the above embodiments, the shape of the facing surface 720, 820 of the main body portion 72, 82 of the one-sided braking unit 7, 8 is not necessarily limited to the illustrated one. For example, in the one-sided braking unit 8 according to the first embodiment, the facing surface 820 may have the same shape as the facing surface 720 according to the second embodiment. Conversely, in the one-sided braking unit 7 according to the second embodiment, the facing surface 720 may have the same shape as the facing surface 820 according to the first embodiment. Further, in the one-sided braking unit 7,8 according to each embodiment, the facing surface 720, 820 may include a part formed by connecting a plurality of flat surface areas at an obtuse angle larger than 90° in the feed direction (front-back direction).

Further, although the one-sided braking unit 7, 8 includes the biasing member 73, 83 for biasing the main body portion 72, 82 in the first rotational direction 701, 801 in each of the above embodiments, the biasing member 73, 83 may be omitted depending on cases. For example, the biasing member 73, 83 may be omitted if the facing surface 720, 820 is sufficiently in contact with the series terminal 9 by the main body portion 72, 82 being sufficiently biased in the first rotational direction 701, 801 by its own weight in the arranged state of the main body portion 72, 82.

Further, in the above embodiments, the configurations of the crimping unit 2, the path defining unit 4, the feeding unit 5 and the interlocking mechanism 6 are not limited to those described above. For example, the crimping unit has only to be so configured that the crimper 23 and the anvil 24 relatively move toward and away from each other. For example, both the crimper 23 and the anvil 24 may move or the crimper 23 may move toward and away from the anvil 24. Further, the feeding unit may be, for example, a feeding mechanism using a separate actuator such as an air cylinder.

Note that components described in the above respective embodiments and respective modifications can be appropriately combined so far as they are not inconsistent with each other.

Although this invention has been described in detail above, the above description is illustrative in all aspects and this invention is not limited to that. It should be appreciated that unillustrated numerous modifications can be anticipated without departing from the scope of this invention.

### List of Reference Numerals

- 1, 1a: terminal crimping device
- 2: crimping unit
- 3: supplying unit
- 4: path defining unit
- 5: feeding unit
- 51: feed claw
- 6: interlocking mechanism
- 7, 8: one-sided braking unit (braking unit)
- 71, 81: supporting portion
- 72, 82: main body portion
- 720, 820: facing surface
- 7201, 8201: target area
- 721: rear curved surface area
- 722: flat surface area
- 723: front curved surface area
- 73, 83: biasing member
- 831: first resilient member
- 832: second resilient member
- 731: resilient member (third resilient member)
- 74: release lever
- 9: series terminal
- 91: terminal
- Y: contact position
- R: pivot axis
- S: reference plane

## Claims

1. A terminal crimping device for crimping one of a plurality of terminals connected in a series terminal to a wire by swaging the terminal by a die, comprising:
a feeding unit for feeding the series terminal by one terminal toward a crimping unit by moving a feed claw hooked to a feed hole of the series terminal placed on a stage in conjunction with a crimping operation in the crimping unit; and
a braking unit for braking a movement of the series terminal,
wherein:
the braking unit includes:
a main body portion arranged to face the series terminal; and
a supporting portion for pivotably supporting the main body portion; and
a pivot axis of the main body portion is located upstream of a reference plane in a feed direction if a surface of the main body portion facing the series terminal is referred to as a facing surface, a position in contact with the series terminal in the facing surface is referred to as a contact position and a virtual plane passing through the contact position and extending along a direction normal to the stage is referred to as the reference plane.

2. A terminal crimping device according to claim 1, wherein the facing surface is a surface having no part bent at an acute angle, but having a part bent at an obtuse angle when viewed in a direction perpendicular to the feed direction of the series terminal and the direction normal to the stage.

3. A terminal crimping device according to claim 1, wherein an angle between a straight line connecting the pivot axis and the contact position and a perpendicular to the stage from the pivot axis is larger than 0° and not larger than 45°.

4. A terminal crimping device according to claim 1, wherein an angle between a straight line connecting the pivot axis and the contact position and a perpendicular to the stage from the pivot axis is larger than 2° and not larger than 10°.

5. A terminal crimping device according to claim 1, wherein the facing surface has an arcuate curved surface area when viewed in a direction perpendicular to the feed direction of the series terminal and the direction normal to the stage.

6. A terminal crimping device according to claim 5, wherein a flat surface area connected to the curved surface area is formed downstream of the curved surface area in the feed direction on the facing surface.

7. A terminal crimping device according to claim 1, wherein the braking unit further includes a biasing member for biasing the main body portion in such a pivot direction as to move the facing surface in a direction opposite to the feed direction.

8. A terminal crimping device according to claim 7, wherein the magnitude of a force of the biasing member for biasing the main body portion changes according to the position of the feed claw.

9. A terminal crimping device according to claim 8, wherein:
the biasing member includes a first resilient member having one end coupled to a position of the main body portion upstream of the pivot axis and the other end integrally coupled to the feed claw;
the main body portion is arranged upstream of the feed claw in the feed direction; and
the first resilient member has a natural length in a state where the feed claw is at a specific position if a position of the feed claw when the constraint of the terminal by the die is started in the crimping unit is referred to as the specific position.

10. A terminal crimping device according to claim 8, wherein the biasing member includes a second resilient member having one end coupled to a position of the main body portion upstream of the pivot axis and the other end coupled to a position of the supporting portion downstream of the pivot axis in the feed direction in an extended state.

11. A terminal crimping device according to claim 8, wherein the biasing member includes a third resilient member having one end coupled to a position of the main body portion downstream of the pivot axis and the other end coupled to a position of the supporting portion downstream of the pivot axis in the feed direction in a shortened state.

12. A terminal crimping device according to claim 1, wherein the braking unit further includes a release lever attached to a position of the main body portion opposite to the facing surface across the pivot axis.

13. A terminal crimping device according to claim 1, wherein the tip of the feed claw closes the feed hole over the entire width along the feed direction with the feed claw hooked to the feed hole.

14. A terminal crimping device according to claim 1, wherein the feed claw is in a non-contact state with the series terminal until the terminal is swaged after being constrained by the die in the crimping unit.
